# EUROPÄISCHE PATENTSCHRIFT

(11) **EP 3 814 633 B1**
(45) Veröffentlichungstag und Bekanntmachung des Hinweises auf die Patenterteilung: **04.12.2024**
(21) Anmeldenummer: 19745052.1
(22) Anmeldetag: 01.07.2019
(51) Int. Cl.: F03G 7/00, F01D 1/36, F01D 5/18, F01D 25/12, F01K 7/16, F02C 1/10, F02C 7/16, F01D 5/08

(54) **SCHEIBENLÄUFERTURBINE, VERFAHREN ZUM BETRIEB EINER SCHEIBENLÄUFERTURBINE, EINRICHTUNG ZUR UMWANDLUNG THERMISCHER ENERGIE IN MECHANISCHE ENERGIE, VERFAHREN ZUR UMWANDLUNG THERMISCHER ENERGIE IN MECHANISCHE ENERGIE SOWIE VERFAHREN ZUR UMWANDLUNG THERMISCHER ENERGIE IN ELEKTRISCHE ENERGIE**
TESLA-TYPE TURBINE, METHOD FOR OPERATING A TESLA-TYPE TURBINE, APPARATUS FOR CONVERTING THERMAL ENERGY INTO MECHANICAL ENERGY, METHOD FOR CONVERTING THERMAL ENERGY INTO MECHANICAL ENERGY AND METHOD FOR CONVERTING THERMAL ENERGY INTO ELECTRICAL ENERGY
TURBINE À ROTOR À DISQUE, PROCÉDÉ PERMETTANT DE FAIRE FONCTIONNER UNE TURBINE À ROTOR À DISQUE, DISPOSITIF DE CONVERSION D'ÉNERGIE THERMIQUE EN ÉNERGIE MÉCANIQUE, PROCÉDÉ DE CONVERSION D'ÉNERGIE THERMIQUE EN ÉNERGIE MÉCANIQUE, AINSI QUE PROCÉDÉ DE CONVERSION D'ÉNERGIE THERMIQUE EN ÉNERGIE ÉLECTRIQUE

(30) Priorität: 29.06.2018 DE 102018115888
(43) Veröffentlichungstag der Anmeldung: 05.05.2021
(73) Patentinhaber: Hellwig, Udo, 12351 Berlin (DE)
(72) Erfinder: Hellwig, Udo, 12351 Berlin (DE)
(74) Vertreter: Schulz Junghans Patentanwälte PartGmbB
(86) Internationale Anmeldenummer: PCT/EP2019/067570
(87) Internationale Veröffentlichungsnummer: WO 2020/002702

(56) Entgegenhaltungen:
- US-A- 3 899 875
- US-A1- 2002 182 054
- US-A1- 2009 260 361
- US-A1- 2014 271 120
- US-A1- 2015 330 234

## Beschreibung

Die Erfindung betrifft eine Scheibenläuferturbine zur Umwandlung der Enthalpie eines Gasvolumenstroms in mechanische Energie, sowie ein Verfahren zum Betrieb der erfindungsgemäßen Scheibenläuferturbine. Ferner betrifft die Erfindung eine Einrichtung zur Umwandlung thermischer Energie in mechanische Energie sowie ein Verfahren zur Umwandlung thermischer Energie in mechanische Energie und ein Verfahren zur Umwandlung thermischer Energie in elektrische Energie.

Gasturbinen sind leistungsbegrenzt durch das Material der kraftaufnehmenden Elemente des Läufers. Dies kann durch eine interne Kühlung dieser Elemente kompensiert werden, indem Kühlmedium hindurchgeleitet und dem Strom des Arbeitsmediums überlassen werden oder durch einen konservativen Kühlprozess, bei dem das Kühlmedium erhalten bleibt. Ersteres ist Stand der Technik, wobei als Kühlmedien Wasserdampf oder Luft verwendet werden. Zweiteres ist ebenfalls Stand der Technik allerdings mit der Einschränkung, dass das Kühlmedium, vorzugsweise Wasser, über die Läuferwelle den Schaufeln zugeführt wird und in den Schaufeln verdampft.

In der US3899875 ist eine Vorrichtung offenbart, die den Wärmeaustausch in einer Tesla-Turbine nutzt, um die Düsenausgangstemperatur, die Systemleistung und den Systemwirkungsgrad zu erhöhen. Zusätzlich zu einem externen Regenerator umfasst die Vorrichtung ein zweites Regenerationssystem in den Turbinenschaufeln selbst. Das System erleichtert das Erreichen sehr hoher Ansauglufttemperaturen am Eintritt in die Brennkammer und bietet gleichzeitig eine Möglichkeit zur Kühlung der Turbinenschaufeln. Durch die Kühlung des äußeren Umfangsbereichs der Schaufeln wird die maximal zulässige Temperatur des Arbeitsgases an der Düse erhöht, da die Schaufeln vor den nachteiligen Auswirkungen hoher Temperaturen, wie z. B. dem Schmelzen, geschützt werden. Mit höheren Gastemperaturen an den Düsen wird eine höhere Leistung und ein höherer Wirkungsgrad der Turbine erreicht. Wenn die Regeneratorparameter richtig ausgelegt und eingestellt sind, kann die Kühlung der Turbinenschaufeln ohne nennenswerte Kühlung des aus den Düsen austretenden Arbeitsgases erfolgen.

Die US2009/0260361 A1 offenbart ein isothermisches Stromerzeugungssystem mit einem isothermen Kompressor zum Komprimieren eines Gases; einem Kühler, der dem isothermen Kompressor ein Kühlfluid zuführt, um das durch den isothermen Kompressor strömende Gas zu kühlen; einem Gegenstrom-Wärmetauscher zum Erwärmen des komprimierten Gases; einem isothermen Expander zum Expandieren des erwärmten komprimierten Gases, um mechanische Leistung zu erzeugen; einem Heizer zum Zuführen eines Heizfluids zu dem isothermen Expander, um das durch den isothermen Expander strömende Gas zu erwärmen; und Mittel zum Leiten des expandierten Gases zurück durch den Gegenstromwärmetauscher, um dem komprimierten Gas, das von dem Kompressor durch den Gegenstromwärmetauscher strömt, Wärme zuzuführen, wobei der isothermische Kompressor gekühltes und expandiertes Gas, das von dem isothermischen Expander durch den Gegenstromwärmetauscher strömt, ansaugt und komprimiert.

Der vorliegenden Erfindung liegt die Aufgabe zugrunde, eine Scheibenläuferturbine und ein Verfahren zum Betrieb einer Scheibenläuferturbine, eine Einrichtung zur Umwandlung thermischer Energie in mechanische Energie und ein Verfahren zur Umwandlung thermischer Energie in mechanische Energie sowie ein Verfahren zur Umwandlung thermischer Energie in elektrische Energie zur Verfügung zu stellen, welche auf effiziente Weise die Umwandlung thermischer Energie in mechanische und/oder elektrische Energie ermöglichen.

Die Aufgabe wird erfindungsgemäß gelöst durch eine Scheibenläuferturbine gemäß Anspruch 1 und ein Verfahren zum Betrieb der erfindungsgemäßen Scheibenläuferturbine gemäß Anspruch 3. Eine vorteilhafte Ausführungsform der erfindungsgemäßen Scheibenläuferturbine wird in Anspruch 2 aufgezeigt. Eine vorteilhafte Ausführungsform des erfindungsgemäßen Verfahrens zum Betrieb der Scheibenläuferturbine wird in Anspruch 4 aufgezeigt.

Ferner wird zur Lösung der Aufgabe eine Einrichtung zur Umwandlung thermischer Energie in mechanische Energie gemäß Anspruch 5 sowie ein Verfahren zur Umwandlung thermischer Energie in mechanische Energie gemäß Anspruch 10 und ergänzend ein Verfahren zur Umwandlung thermischer Energie in elektrische Energie gemäß Anspruch 11 zur Verfügung gestellt. Vorteilhaften Ausführungsformen der erfindungsgemäßen Einrichtung zur Umwandlung thermischer Energie in mechanische Energie werden in den Ansprüchen 6 bis 9 dargelegt.

Ein erster Aspekt der Erfindung ist eine Scheibenläuferturbine zur Umwandlung der Enthalpie eines Gasvolumenstroms in mechanische Energie, umfassend wenigstens eine auf einer Rotationsachse angeordnete Scheibe, welche bei im Wesentlichen tangentialer Anströmung mit einem Gasvolumenstrom in Rotation versetzbar ist, sodass mechanische Energie an einer mit der Scheibe gekoppelten Welle abnehmbar ist. Dabei weist ein die Scheibe ausbildender Scheibenkörper zumindest einen Hohlraum auf, in dem zwecks Kühlung des Scheibenkörpers ein Kühlmedium, insbesondere eine Kühlflüssigkeit, aufgenommen oder aufnehmbar ist. Ferner weist die Scheibenläuferturbine wenigstens einen Gasaufnahmeraum zur Aufnahme und Ausbringung des zumindest teilweise tangential die Scheibe anströmenden Gasvolumenstroms auf.

Mit anderen Worten ist die erfindungsgemäße Scheibenläuferturbine eine Scheibenläuferturbine mit wenigstens einer, vorzugsweise mehreren auf einer Rotationsachse angeordneten Scheibe bzw. Scheiben, die bei im Wesentlichen tangentialer Anströmung mit einem Gasvolumenstrom in Rotation versetzbar ist bzw. sind, sodass mechanische Energie an einer mit der Scheibe gekoppelten Welle abnehmbar ist, wobei die Scheibe bzw. die Scheiben im eine jeweilige Scheibe ausbildenden Scheibenkörper zumindest einen Hohlraum aufweist, in dem eine Kühlflüssigkeit aufgenommen oder aufnehmbar ist zwecks Kühlung des Scheibenkörpers, und wobei die Scheibenläuferturbine des Weiteren einen Gasaufnahmeraum zur Aufnahme und Ausbringung eines zumindest teilweisen tangentialen Gasvolumenstroms auf die Scheibe bzw. Scheiben aufweist.

Unter einer tangentialen Anströmung ist eine Anströmung der Scheibe bzw. Scheiben in einem radial äußeren Bereich der Scheibe in einer im Wesentlichen zur Rotationsachse queren Anströmrichtung zu verstehen. Bevorzugt wir die Umfangsfläche der Scheibe bzw. der Scheiben tangential angeströmt.

Die Scheibe bzw. die Scheiben sind auf einer Rotationsachse angeordnet. Durch die tangentiale Anströmung wird die Scheibe in Rotation, mit anderen Worten in eine Rotationsbewegung um die Rotationsachse versetzt. Ferner ist die Scheibe mit einer Welle gekoppelt, mittels der die mechanische Energie der Rotation abnehmbar ist. In einer Ausführung ist die Scheibe bzw. sind die Scheiben an der Welle drehfest angeordnet.

Die Scheibe weist im Wesentlichen in zumindest einer Ebene, insbesondere einer Ebene, zu welcher die Rotationsachse der Scheibe senkrecht steht, eine runde Form auf. Von dieser runden Form kann jedoch auch abgewichen werden, zum Beispiel in der Art, dass die Scheiben eine Schaufelform aufweisen. Mit anderen Worten können anstelle von Scheiben auch Schaufelelemente verwendet werden, wie sie beispielsweise von einer Radialturbine bekannt sind.

Das Gas, welches die Scheibe bzw. die Scheiben anströmt, wird auch als Arbeitsmedium bezeichnet. Dabei kann es sich beispielsweise um ein Rauchgas einer Verbrennungsanlage handeln oder alternativ um ein Arbeitsmedium, welches mittels einer Wärmetauschereinrichtung erwärmt wird. Im letzten Fall ist das Arbeitsmedium vorteilhafterweise ein Edelgas, insbesondere Xenon. Edelgase sind sinnvoll, weil sie nicht in der Lage sind zu strahlen, da sie einatomig sind. Die Strahlung des Gaskörpers würde zu einer erhöhten Wärmeübertragung führen, was die Gefahr birgt, dass sich der Gaskörper zwischen den Scheiben der Turbine zu schnell abkühlt und somit keine Arbeit an die Scheiben abgeben kann oder nur in sehr geringem Maße.

Eine Scheibe wird durch einen Scheibenkörper ausgebildet. Ein Scheibenkörper einer Scheibe, insbesondere einer jeden Scheibe, weist dabei wenigstens einen Hohlraum auf. Es ist nicht ausgeschlossen, dass eine Scheibe mehrere Hohlräume aufweist, Insbesondere erstreckt sich der Hohlraum von einem radial inneren Bereich der Scheibe in einen radial äußeren Bereich der Scheibe.

Im Hohlraum der Scheibe ist Kühlmedium aufgenommen oder aufnehmbar. Insbesondere ist das Kühlmedium eine Kühlflüssigkeit, was bedeutet, dass das Kühlmedium bei Umgebungsbedingungen in der flüssigen Phase vorliegt. Beispielsweise handelt es sich bei dem Kühlmedium um Wasser. Als Kühlmedien können organische oder anorganische Fluide und Metalle eingesetzt werden.

Die erfindungsgemäße Scheibenläuferturbine weist einen Gasaufnahmeraum auf. In den Aufnahmeraum wird das Gas, welches die Scheibe bzw. die Scheiben tangential anströmt durch eine Einlasseinrichtung eingebracht, in diesem aufgenommen und durch eine Auslasseinrichtung ausgebracht. Mit anderen Worten ist der Gasaufnahmeraum dazu eingerichtet ist, dass das Gas in diesen Ein- und Ausströmen kann, er also folglich einen Einlass und einen Auslass besitzt, wobei der Einlass vorzugsweise in einem von der Rotationsachse der Scheiben entfernten Bereich und der Auslass in einem achsennahen Bereich angeordnet ist. Die Scheiben, bevorzugt alle Scheiben, der Scheibenläuferturbine sind innerhalb des Gasaufnahmeraums angeordnet.

In einer Ausgestaltungsform der erfindungsgemäßen Scheibenläuferturbine ist die Scheibe dazu eingerichtet, in deren Hohlraum aufgenommenes Kühlmedium bei Zuführung von Wärme von dem die Scheibe anströmenden Gasvolumenstrom an die Scheibe im Hohlraum wenigstens teilweise zu verdampfen.

Mit anderen Worten ist die Scheibe dazu eingerichtet, dass Wärme von dem Gasvolumenstrom, welcher die Scheibe anströmt bzw. diese umströmt, aufzunehmen und an das Kühlmedium im Hohlraum der Scheibe abzugeben, sodass das Kühlmedium im Inneren des Scheibenkörpers wenigstens teilweise verdampft.

Bei mehreren Scheiben ist zumindest eine der Scheiben dazu eingerichtet, in deren Hohlraum aufgenommenes Kühlmittel bei Zuführung von Wärme aus dem umströmenden Gasvolumenstrom in dem Hohlraum zu verdampfen. Grundsätzlich ist es ebenfalls möglich, dass zumindest eine der Scheiben dazu eingerichtet ist, in deren Hohlraum aufgenommenes Kühlmittel in dem Hohlraum bei Zuführung von Wärme aus dem umströmenden Gasvolumenstrom im Wesentlichen ohne Verdampfung zu erwärmen.

In einer Ausführungsform wird der Dampf des Kühlmediums auf die Welle, insbesondere die Welle des Läufers, zurückgeführt und vorzugsweise kraftableitend entspannt, kondensiert und in die Scheiben bzw. die Schaufeln zurückgeleitet. In diesem Fall wird das Kühlmedium zwecks Kondensation aus dem Hohlraum herausgeführt und nach der Kondensation wieder in den Hohlraum zurückgeführt.

Das so kondensierte Kühlmedium kann allerdings auch auf andere Weise eingesetzt werden, indem es gemäß einer anderen Ausführungsform die kraftaufnehmenden Elemente des Läufers, das heißt die Scheiben bzw. die Schaufeln, gar nicht verlässt, sondern quasi in situ verdampft und kondensiert wird. Dieser Vorgang ist ähnlich wie dem in sogenannten "heat-pipes". Am einfachsten lässt sich dies mit rotierenden Scheiben einer Scheibenturbine in Anlehnung an eine Tesla-Turbine realisieren, wobei die notwendige Bedingung ist, dass die Scheiben hohl sind, mit anderen Worten einen Hohlraum aufweisen, und ein Kühlmedium enthalten. Da die Scheiben rotieren, wird das Kühlmedium nach radial außen an den Scheibenaußenrand gedrückt, wo es durch heißes Gas in der Umgebung der Scheibe verdampft. Der Dampf des Kühlmediums hat eine wesentlich geringere Dichte als die flüssige Phase des Kühlmediums, sodass er stets von der flüssigen Phase verdrängt werden kann. Dies kommt dem Umstand entgegen, dass die Wärmestromdichten am radial äußeren Rand der Scheibe besonders hoch sind, die flüssige Phase aber in der Lage ist, hohe Wärmestromdichten aufzunehmen, ohne Dampfpolster zu bilden.

Der Dampf wird aus Kontinuitätsgründen in den Zentralbereich der Scheibe, also nach radial innen, geleitet, wo er kondensiert, da das Gas, welches zum Beispiel ein Rauchgas sein kann, in der Nähe der Rotationsachse bzw. der Welle kälter ist. Die Wärmeströme sind über die Siedetemperatur, die Flüssigkeitsmenge und die Gastemperaturen vorteilhafterweise so eingestellt bzw. einstellbar, dass der aufnehmende gleich dem abgebenden Wärmestrom ist. Aufgrund der Wärmeabgabe im äußeren Scheibenbereich ist das Gas nicht oder nur sehr eingeschränkt in der Lage, Arbeit an der Scheibe zu leisten. Das heißt in diesem Bereich findet vorwiegend Wärmeübertragung an das Kühlmedium im Inneren des Scheibenkörpers statt. Im zentralen, also radial inneren Scheibenbereich wird die Wärme wieder an das Gas abgegeben, was allerdings mit einer äquivalenten Arbeitsverrichtung verbunden ist. Das heißt das Gas überträgt annähernd isotherm Kraft auf die Scheibe.

Die Scheiben der erfindungsgemäßen Scheibenläuferturbine sind derart gestaltet, dass sie über einen internen Fluidkreislauf bzw. Kühlmediumkreislauf im Hohlraum verfügen, sodass es im äußeren Bereich zur Verdampfung und im zentralen, also radial inneren Bereich zur Kondensation kommt als Folge von externer Wärme Zufuhr durch und Wärmeabfuhr an ein umgebendes Gas, vorzugsweise ein heißes Rauchgase, welches als Arbeitsmedium zur Gewinnung von mechanischer Energie verwendet wird.

Der Scheibenkörper besteht typischer- aber nicht notwendigerweise im Wesentlichen aus einem Metall. Die Festigkeit von Metallen ist prinzipiell von der Temperatur abhängig und nimmt mit zunehmender Arbeitstemperatur, insbesondere mit zunehmender Temperatur des Gasvolumenstroms, der Scheibenläuferturbine progressiv ab. Das heißt, dass durch eine erfindungsgemäße Kühlung der Scheiben der Scheibenläuferturbine die Turbine bei einer höheren Arbeitstemperatur betrieben wird und die Arbeitsaufnahme gesteigert werden kann. Mit gekühlten Scheiben ist es demnach möglich, leichte Materialien mit geringer Festigkeit für die Ausgestaltung des Scheibenkörpers vorzusehen, ohne dass Bruchgefahr bestünde. Zugleich werden die Konstruktionen speziell von Scheibenläuferturbinen wesentlich kompakter.

Der Effekt der erfindungsgemäßen Scheibenläuferturbine ist, dass aufgrund der Kühlung der Scheibe diese einer relativ geringen thermischen Belastung ausgesetzt ist, sodass eine Vielfalt von Materialien zur Ausbildung des jeweiligen Scheibenkörpers eingesetzt werden können, unter anderem auch Materialien, die eine geringe Dichte und demzufolge ein geringes Gewicht aufweisen. Insbesondere Scheiben aus Materialien mit sehr geringer Dichte können aufgrund ihres dadurch bedingten geringen Massenträgheitsmoments mit einer sehr hohen Drehzahl gedreht werden, so dass die Turbine mit hoher Drehzahl und demzufolge mit hohen Wirkungsgrad betrieben werden kann.

In einer spezifischen Ausgestaltungsform umfasst die erfindungsgemäße Scheibenläuferturbine mehrere Scheiben, welche auf einer Rotationsachse angeordnet sind, wobei die Scheibenkörper zueinander benachbarter Scheiben mittels Verbindungselementen mechanisch miteinander verbunden sind. Zu diesem Zweck können die Scheibenkörper zum Beispiel wenigsten eine Aussparung oder Hülse umfassen, welche zur mechanischen Anbindung wenigsten einer benachbarten Scheibe eingerichtet ist. Mit anderen Worten werden die Scheibenkörper durch Hülsen, die eine äußere Befestigung ermöglichen, miteinander kombiniert.

Vorteilhafterweise sind zwischen zwei benachbarten Scheiben Distanzelemente zur Gewährleistung eines definierten Abstands angeordnet. Die Distanzelemente sind mechanisch, bevorzugt im radial äußeren Bereich der Scheiben angeordnet. Auf diese Weise ist ein Scheibenpaket realisiert.

Ein zweiter Aspekt der Erfindung ist ein Verfahren zum Betrieb einer erfindungsgemäßen Scheibenläuferturbine zur Umwandlung der Enthalpie eines Gasvolumenstroms in mechanische Energie, wobei ein Gasvolumenstrom im Wesentlichen tangential die Scheibe anströmend dieser zugeführt wird, sodass die Scheibe reibungsbedingt in Rotation versetzt wird.

Vorteilhafterweise werden mehrere Scheiben einer Scheibenläuferturbine reibungsbedingt in Rotation versetzt.

In einer Ausgestaltungsform des erfindungsgemäßen Verfahrens zum Betrieb der Scheibenläuferturbine wird Wärme des Gasvolumenstroms auf das Kühlmedium im Hohlraum des Scheibenkörpers übertragen, sodass das Kühlmedium zumindest teilweise verdampft.

In einer speziellen Ausgestaltungsform des erfindungsgemäßen Verfahrens zum Betrieb der Scheibenläuferturbine wird Wärme des Gasvolumenstroms auf das Kühlmedium im Hohlraum des Scheibenkörpers übertragen, sodass die Temperatur des Kühlmediums erhöht wird, wobei das Kühlmedium im Wesentlichen in flüssiger Phase vorliegend verbleibt.

Ein dritter Aspekt der Erfindung ist eine Einrichtung zur Umwandlung thermischer Energie in mechanische Energie, welche eine erfindungsgemäße Scheibenläuferturbine umfasst, wobei die Scheibe der Scheibenläuferturbine koaxial auf einer Welle angeordnet ist. Die Welle ist mechanisch mit einer Verdichtungseinheit verbunden, die wenigstens eine mit der Welle rotationsfest verbundene Verdichterscheibe aufweist, sodass bei Rotation der Scheibenläuferturbine die Verdichterscheibe in Rotation versetzbar ist. Ferner umfasst die Verdichtungseinheit einen Verdichtergasaufnahmeraum, welcher strömungstechnisch mit dem Gasaufnahmeraum der Scheibenläuferturbine verbunden ist, sodass von der Verdichtungseinheit verdichtetes Gas der Scheibenläuferturbine, insbesondere dem Gasaufnahmeraum der Scheibenläuferturbine, zuführbar ist.

Mit anderen Worten umfasst die Einrichtung zur Umwandlung thermischer Energie in mechanische Energie eine erfindungsgemäße Scheibenläuferturbine, wobei die Scheibe bzw. die Scheiben koaxial auf einer Welle angeordnet ist bzw. sind, und wobei die Welle mechanisch mit einer Verdichtungseinheit verbunden ist, die eine oder mehrere VerdichterScheiben aufweist, die rotationsfest mit der Welle verbunden ist bzw. sind, so dass bei Rotation der Scheibenläuferturbine die Verdichterscheibe bzw. Verdichterscheiben in Rotation versetzt werden; und wobei die Verdichtungseinheit einen Verdichtergasaufnahmeraum umfasst, der strömungstechnisch mit dem Gasaufnahmeraum der Scheibenläuferturbine verbunden ist, so dass von der Verdichtungseinheit verdichtetes Gas der Scheibenläuferturbine zuführbar ist.

Bevorzugt umfasst die Scheibenläuferturbine der erfindungsgemäßen Einrichtung mehrere Scheiben, welche auf einer gemeinsamen Welle koaxial angeordnet sind. Durch den Gasvolumenstrom, welcher die Scheiben tangential anströmt, sind diese in eine Rotationsbewegung versetzbar. Durch die rotationsfeste Verbindung der Verdichterscheibe bzw. Verdichterscheiben der Verdichtereinheit ist die Rotationsbewegung auf ebendiese übertragbar. Mit anderen Worten wird die Verdichterscheibe ebenfalls in Rotation versetzt.

Die Verdichterscheiben sind in einem Verdichergasaufnahmeraum angeordnet. Dieser Verdichergasaufnahmeraum ist auf strömungstechnische Weise mit dem Gasaufnahmeraum der Scheibenläuferturbine verbunden. Mit anderen Worten ist ein Gasaustausch zwischen dem Verdichergasaufnahmeraum und dem Gasaufnahmeraum realisierbar.

In einer spezifischen Ausführungsform sind sowohl Scheiben als auch Verdichterscheiben innerhalb eines Gehäuses angeordnet, jedoch über ein Trennelement wenigstens abschnittsweise getrennt.

Die Verdichtereinheit verdichtet Gas. Mit anderen Worten wird in der Verdichtereinheit der Druck eines Gases erhöht, wobei typischerweise ebenfalls die Temperatur des Gases erhöht wird. Über die strömungstechnische Verbindung zwischen dem Verdichergasaufnahmeraum und dem Gasaufnahmeraum ist das verdichtete Gas dem Gasaufnahmeraum und damit den Scheiben der Scheibenläuferturbine zwecks Verrichtung von Arbeit an den Scheiben bzw. der Scheibe zuführbar, wobei das Gas in der Scheibenläuferturbine entspannt wird.

Ferner ist vorteilhafterweise entspanntes Gas aus der Scheibenläuferturbine der Verdichtereinheit mittels einer weiteren strömungstechnischen Verbindung zuführbar, so dass ein geschlossener Gaskreislauf zwischen der Scheibenläuferturbine und der Verdichtereinheit realisierbar ist. Ein geschlossener Gaskreislauf des Arbeitsmediums ist beispielsweise vorteilhaft im Falle der Verwendung von Edelgasen als Arbeitsmedium.

Die Verdichtereinheit der erfindungsgemäßen Einrichtung zur Umwandlung thermischer Energie in mechanische Energie kann auch als Rotationsverdichter bezeichnet werden. Der Rotationsverdichter nimmt das in der Scheibenläuferturbine entspannte Arbeitsmedium, mit anderen Worten den entspannten Gasvolumenstrom, bevorzugt in einem wellennahen Bereich auf. Dazu ist der Rotationsverdichter bevorzugt unmittelbar neben dem Entspanner, also der Scheibenläuferturbine, angeordnet. Das verdichtete Arbeitsmedium verlässt den Verdichter in einer spezifischen Ausführungsform über tangential orientierte Öffnungen am Ende der beiden exzentrischen Sammler und wird zur Aufheizung einer Brennkammer zugeführt, um hier erneut, bevorzugt mittels einer Einrichtung zum Wärmetausch, aufgewärmt zu werden.

In einer Ausführungsform der erfindungsgemäßen Einrichtung zur Umwandlung thermischer Energie in mechanische Energie weist die Verdichterscheibe in einem die Verdichterscheibe ausbildenden Scheibenkörper wenigstens einen Hohlraum auf, wobei der Hohlraum wenigstens einer Scheibe der Scheibenläuferturbine strömungstechnisch mit dem Hohlraum wenigstens einer Verdichterscheibe verbunden ist, sodass wenigstens teilweise in gasförmiger Phase vorliegendes Kühlmedium aus dem Hohlraum der Scheibe der Scheibenläuferturbine dem Hohlraum der Verdichterscheibe zuführbar ist.

Das bedeutet, dass die Verdichterscheibe bzw. Verdichterscheiben ebenfalls in dem jeweiligen Scheibenkörper einen Hohlraum aufweist, wobei der Hohlraum der Scheibe der Scheibenläuferturbine strömungstechnisch mit dem Hohlraum der Verdichterscheibe verbunden ist, sodass in gasförmiger Phase vorliegendes Kühlmittel aus dem Hohlraum der Scheibe dem Hohlraum der Verdichter-Scheibe zuführbar ist.

Mit anderen Worten ist das wenigstens teilweise in einer gasförmigen Phase vorliegende Kühlmedium, welches durch Wärmezufuhr vom Gasvolumenstrom an die Scheibe der Scheibenläuferturbine wenigstens teilweise verdampft wurde, einem Hohlraum, welcher durch den Scheibenkörper der Verdichterscheibe ausgebildet wird, mittels einer strömungstechnischen Verbindung zwischen dem Hohlraum der Scheibe und dem Hohlraum der Verdichterscheibe zuführbar.

Grundsätzlich können mehrere Scheiben der Scheibenläuferturbine mit mehreren Verdichterscheiben der Verdichtereinheit verbunden sein.

Bevorzugt ist die strömungstechnische Verbindung zwischen den Hohlräumen von Scheibe und Verdichterscheibe in einem wellennahen Bereich ausgebildet, sodass das bevorzugt im radial inneren Bereich des Hohlraums der Scheibe in gasförmiger Phase vorliegendes Kühlmedium in den Hohlraum der Verdichterscheibe strömen kann.

In einer speziellen Ausführungsform ist eine zweite strömungstechnische Verbindung zwischen den Hohlräumen der Scheibe und der Verdichterscheibe in einem radial äußeren Bereich ausgebildet, sodass das kondensierte Kühlmedium über diese strömungstechnische Verbindung vom Hohlraum der Verdichterscheibe in den Hohlraum der Scheibe strömen kann. Auf diese Art ist zwischen Verdichtereinheit und Scheibenläuferturbine bzw. deren Scheiben ein geschlossener Kühlmediumkreislauf ausgebildet.

Im Gegensatz zur Entspannung des Gasvolumenstroms in der erfindungsgemäßen Scheibenläuferturbine, bei der die Temperatur des Arbeitsmediums, also des Gases, insbesondere im isentropen Fall, ständig abnimmt, nimmt die Temperatur bei der insbesondere isentropen Verdichtung in der Verdichtereinheit ständig zu. Bei der Entspannung in der erfindungsgemäßen Scheibenläuferturbine wird die Wärme innerhalb der Scheibe, so verteilt, dass die im radial äußeren Bereich der Scheibe, also in einem von der Welle entfernten Bereich, abgeführte Wärme dem radial inneren, also der Welle nahen Bereich in im Wesentlichen gleichem Maße wieder zugeführt wird. Der Übergangsbereich zwischen dem radial äußeren und dem radial inneren Bereich der Scheibe, auch als Restbereich der Scheibe, der im wellennahen Bereich liegt, bezeichenbar, ermöglicht eine im Wesentlichen isentrope Entspannung.

Bei der Verdichtung in der Verdichtereinheit ist obiges Prinzip der Wärmeverteilung umgekehrt und zwar so, dass im radial inneren Bereich der Scheibe, also im Hohlraum der Verdichterscheibe, Wärme abgeführt würde und im oberen bzw. radial äußeren Bereich der Verdichterscheibe in im Wesentlichen gleichem Maße Wärme dem Arbeitsmedium wieder zugeführt wird.

In einer weiteren Ausführungsform der erfindungsgemäßen Einrichtung zur Umwandlung thermischer Energie in mechanische Energie ist die Verdichterscheibe rotationsfest mit einer drehbaren Kühlungseinheit verbunden, wobei die Kühlungseinheit wenigstens eine Kühlungsscheibe aufweist, die koaxial auf einer Kühlerwelle angeordnet ist, die mit der Welle der Scheibenläuferturbine drehfest verbunden ist. Ferner weist die Kühlungsscheibe in dem die Kühlungsscheibe ausbildenden Scheibenkörper wenigstens einen Hohlraum auf, wobei der Hohlraum der Kühlungsscheibe strömungstechnisch mit dem Hohlraum der Verdichterscheibe verbunden ist, sodass in der Verdichtereinheit erwärmtes Kühlmedium der Kühlungseinheit zuführbar ist, mittels der das Kühlmedium in der Kühlungsscheibe der Kühlungseinheit kühlbar ist und von dieser wieder an die Verdichtungsscheibe der Verdichtereinheit rückführbar ist.

Mit anderen Worten ist die Verdichterscheibe bzw. sind die Verdichterscheiben rotationsfest mit einer drehbaren Kühlungseinheit verbunden, wobei die Kühlungseinheit ebenfalls eine Kühlungsscheibe bzw. mehrere Kühlungsscheiben aufweist, die koaxial auf einer Kühlerwelle angeordnet ist bzw. sind, die mit der Welle der Scheibenläuferturbine drehfest verbunden ist, wobei die Kühlungsscheibe in ihrem Scheibenkörper ebenfalls einen Hohlraum zur Aufnahme von Kühlflüssigkeit aufweist und Kühlungsscheibe bzw. die Kühlungsscheiben strömungstechnisch mit der Verdichterscheibe bzw. den Verdichterscheiben verbunden ist bzw. sind, so dass in der Verdichtereinheit erwärmte Kühlflüssigkeit der Kühlungseinheit zuführbar ist, wo die Kühlflüssigkeit in der bzw. den Scheiben der Kühlungseinheit kühlbar ist und von dieser bzw. diesen wieder an die Scheibe bzw. Scheiben der Verdichtereinheit rückführbar ist.

Die Kühleinheit kann auch als Kondensator, insbesondere als Rotationskondensator, bezeichnet werden und ist dazu eingerichtet, mit der Verdichtereinheit zu kommunizieren, das heißt insbesondere das Kühlmedium mit der Verdichtereinheit auszutauschen.

Die Kühlungseinheit weist ebenfalls Scheiben, sogenannte Kühlungsscheiben auf, welche auf einer Kühlerwelle angeordnet sind, wobei die Kühlerwelle mit der Welle der Scheibenläuferturbine drehfest verbunden ist. Mit anderen Worten bewirkt die Rotation der Scheiben der Scheibenläuferturbine eine Rotation der Kühlungsscheiben. Es ist dabei nicht ausgeschlossen, dass die Kühlerwelle und Welle eine bauliche Einheit ausbilden.

Auch die Kühlungsscheibe weist einen Hohlraum auf. Dieser Hohlraum der Kühlungsscheibe ist mit dem Hohlraum der Verdichterscheibe verbunden, sodass ein Kühlmedium, welches in die Hohlräume eingebracht ist oder einbringbar ist, von dem einen in den anderen Hohlraum strömen kann. Besagtes Medium ist insbesondere ein Kühlmedium, welches in der Verdichtereinheit erwärmt wurde und von deren Hohlraum zwecks Kühlung in den Hohlraum der Kühlungsscheibe strömen. Mit anderen Worten wird dem Kühlmedium mittels der Kühlungsscheibe Wärme entzogen. Das gekühlte Kühlmedium wird der Verdichtereinheit bzw. der Verdichterscheibe wieder zugeführt. Mit anderen Worten wird das zweite Kühlmedium zwischen Verdichter- und Kühlungsschiebe in einem Kreislauf geführt.

Dabei ist es möglich aber nicht zwingend erforderlich, dass im Hohlraum einer Scheibe der Scheibenläuferturbine das gleiche, insbesondere dasselbe Kühlmedium angeordnet ist, wie in den Hohlräumen der Verdichter- und/oder der Kühlungsschiebe. In einer speziellen Ausführungsform ist in den Hohlräumen der Scheiben der Scheibenläuferturbine ein erstes Kühlmedium angeordnet und in den Hohlräumen von Verdichter- und/oder Kühlungsschiebe ein zweites Kühlmedium.

Der Zweck der Kühlungseinheit besteht darin, in der Verdichtereinheit erwärmtes Kühlmedium, welches im Hohlraum der Verdichterscheibe typischer- aber nicht notwendigerweise teilweise in gasförmiger Phase vorliegt, zu kühlen. Mit anderen Worten dient die Kühlungseinheit typischerweise der Kondensation des Kühlmediums, weswegen die Kühlungseinheit auch als Kondensator bezeichnet werden kann.

Die Kühlungseinheit umfasst einen Kühlmittelaufnahmeraum, zur Aufnahme und Abgabe eines Kühlmittels, welches die Kühlungsscheiben wenigstens teilweise umströmt, sodass die Wärme des erwärmten Kühlmediums an das Kühlmittel angeben werden kann, zwecks Kühlung des Kühlmediums vor Rückführung in die Verdicherteinheit, insbesondere den Hohlraum der Verdichterscheibe. Das Kühlmittel kann auch als äußeres Kühlmittel bezeichnet werden, während das Kühlmedium, welches zwischen den Hohlräumen von Kühlungs- und Verdichterscheibe strömt, als inneres Kühlmedium bezeichnet werden kann.

Die Kühlungseinheit bzw. der Rotationskondensator und die Verdichtereinheit bzw. der Rotationsverdichter können vollständig in ein Gehäuse, insbesondere dasselbe Gehäuse wie die Scheibenläuferturbine, integriert sein. Jedoch sind der Kühlmittelaufnahmeraum und der Verdichtergasaufnahmeraum vorteilhafterweise durch eine Trenneinheit voneinander getrennt, sodass im Wesentlichen kein Austausch zwischen dem Gas im Verdichtergasaufnahmeraum und dem Kühlmittel im Kühlmittelaufnahmeraum erfolgt.

In einer weiteren Ausführungsform der erfindungsgemäßen Einrichtung zur Umwandlung thermischer Energie in mechanische Energie ist eine erste strömungstechnische Verbindung zwischen dem Hohlraum der Verdichterscheibe und dem Hohlraum der Kühlungsscheibe mittels wenigstens eines durchströmbaren, im Wesentlichen achsparallel zur Rotationsachse der Welle zwischen der Verdichterscheibe und der Kühlungsscheiben angeordneten, Quersteges realisiert.

Mit anderen Worten umfasst die Einrichtung eine erste strömungstechnische Verbindung zwischen der Verdichterscheibe bzw. Verdichterscheiben und der Kühlungsscheibe bzw. den Kühlungsscheiben die mittels wenigstens eines durchströmbaren Quersteges zwischen den Scheiben realisiert ist, der im Wesentlichen achsparallel zur Rotationsachse der Welle angeordnet ist.

Dabei ist der durchströmbare Quersteg vorteilhafterweise durch ein Rohr oder mehrere Rohrabschnitte ausgebildet, wobei der Rohrquerschnitt des Rohrs oder der mehreren Rohrabschnitte nicht notwendigerweise rund sein muss.

Der durchströmbare Quersteg weist zwecks Realisierung der strömungstechnischen Verbindung Öffnungen auf, welche eine Verbindung zwischen dem Inneraum des Querstegs und den Hohlräumen von Kühlungs- und Verdichterscheibe ermöglichen.

In einer weiteren Ausführungsform der erfindungsgemäßen Einrichtung zur Umwandlung thermischer Energie in mechanische Energie ist wenigstens eine zweite strömungstechnische Verbindung zwischen einem Hohlraum wenigstens einer Verdichterscheibe und einem Hohlraum wenigsten einer Kühlungsscheibe mittels eines hohlen Verbindungsraums in einem Wellenabschnitt realisiert, der sich von einem von einer Verdichterscheibe abgedeckten Wellenbereich bis zu einem von einer Kühlungsscheibe abgedeckten Wellenbereich erstreckt. Dabei weisen die abgedeckten Wellenbereiche axial jeweils wenigstens eine Öffnung auf, zwecks Realisierung einer Strömung des Kühlmediums in und aus dem hohlen Verbindungsraum der Welle in und aus dem Hohlraum der Verdichterscheibe und/oder in und aus dem Hohlraum der Kühlungsscheibe.

Insbesondere wird durch diese Ausführungsform eine Strömung aus dem Hohlraum der Verdichterscheibe über den Verbindungsraum in den Hohlraum der Kühlungsscheibe realisiert.

Mit anderen Worten umfasst die Einrichtung eine zweite strömungstechnische Verbindung zwischen der Verdichterscheibe bzw. den Verdichterscheiben und der Kühlungsscheibe bzw. den Kühlungsscheiben die durch einen Hohlraum in einem Wellenabschnitt realisiert ist, der sich von einem von der Verdichterscheibe bzw. den Verdichterscheiben abgedeckten Wellenbereich bis zu einem von der Kühlungsscheibe bzw. den Kühlungsscheiben abgedeckten Wellenbereich erstreckt, wobei die hier ausgeführte Welle bzw. der betreffende Wellenabschnitt axial jeweils wenigstens eine Öffnung aufweist, um eine Strömung von der betreffenden Scheibe in den Hohlraum der Welle bzw. in umgekehrter Richtung zu ermöglichen.

Vorteilhafter- aber nicht notwendigerweise bilden in dieser Ausführungsform die Welle, auf der die Verdichterscheiben angeordnet sind, und die Kühlungswelle eine bauliche Einheit aus.

Die abgedeckten Wellenbereiche weisen axial jeweils wenigstens eine Öffnung auf. Mit anderen Worten, sind die jeweiligen Hohlräume der besagten Scheiben über die Öffnung in den abgedeckten Wellenbereichen mit dem Verbindungsraum verbunden.

Vorteilhafterweise weist der jeweilige Wellenabschnitt mehrere auf seinem Umfang bevorzugt in regelmäßigen Abständen verteilte Öffnungen auf. In einer spezifischen Ausführungsform erstrecken sich die Öffnungen der abgedeckten Wellenbereiche der Kühlungsscheibe und/oder der Verdichterscheiben geneigt in Bezug zu einer radialen Richtung, so dass das Kühlmedium tangential in den holen Verbindungsraum ein- und/oder ausströmt. Die spezifische Ausgestaltung der Öffnungen im abgedeckten Wellenbereich der Kühlungsscheiben führt zu einer tangentialen Beschleunigung des Kühlmediums beim Austritt aus dem hohlen Verbindungsraum.

Mittels der ersten und der zweiten strömungstechnischen Verbindung ist ein geschlossener Kühlmedienkreislauf eines inneren Kühlmediums zwischen Verdichtereinheit und Kühlungseinheit, insbesondere zwischen den Hohlräumen der jeweiligen Scheiben realisierbar, zur Kühlung, insbesondere zur Kondensation, des inneren Kühlmediums.

In der Kühlungseinheit bzw. dem Rotationskondensator hat das Kühlmedium im Inneren der Kühlungsscheiben eine höhere Dichte als in den Scheiben des Verdampfers bzw. in der Verdichtereinheit. Entsprechend einem Naturumlaufkessel wirkt der Kondensator somit als Fallrohr- und der Verdichter als Steigrohrsystem nur mit dem Unterschied, dass das Fluid bzw. das Kühlmedium, der Zentrifugalkraft folgend, sich radial bewegt. Im Kondensator bewegt sich das Fluid von der Wellenachse weg nach außen, wird durch kurze Rohre bzw. die Querstege in den Verdampfer bzw. die Verdichterscheiben der Verdichtereinheit geleitet, wo es sich zur Wellenachse hin, also nach radial innen, bewegt. In der Welle sind Bohrungen bzw. als Bohrungen ausgeführte Öffnungen, die den Weg in den hohlen Verbindungsraum der Welle frei machen, womit die Rückführung des Fluids in den Kondensatorbereich bzw. die Kühlungseinheit möglich ist. Die Welle ist im Inneren axial gegenüber der Umgebung durch Blenden abgedichtet und bildet so den hohlen Verbindungsraum aus.

Die äußeren Scheibenbereiche der Kühlungsscheiben der Kühlungseinheit werden beispielsweise durch ein externes Kühlmittel, insbesondere durch Umgebungsluft, Wasser aus der Umgebung oder eine andere externe Wärmesenke, umströmt. Diese äußeren Ströme sind durch eine Trenneinrichtung bzw. eine Trennscheibe, die am äußeren Rand in den Mantel der Turbine geführt ist, hermetisch getrennt. Das heißt mit anderen Worten, dass bei einer kompakten Bauweise, in welcher Scheibenläuferturbine, Verdichtereinheit und/oder Kühlungseinheit in ein gemeinsames Gehäuse integriert sind, das externe Kühlmittel strömungstechnisch im Wesentlichen von dem die Scheiben von Verdichereinheit und/oder Scheibenläuferturbine umgebenden Gas getrennt ist.

Das externe Kühlmittel tritt vorzugsweise in einem wellennahen Bereich ein, wo das interne Kühlmedium noch einen hohen Dampfanteil hat. Auf diese Weise wird der Kondensationseffekt stärker, als bei umgekehrter Vorgehensweise. Die Verdichtereinheit arbeitet typischer- aber nicht notwendigerweise bei etwa kontanter Temperatur und ebenso das innere Kühlmedium, das sich im Verdampfungszustand befindet. Aufgrund der zunehmenden Dichte des in der Verdichtereinheit zu verdichtenden Arbeitsmediums kommt es zu erhöhter Wärmestromdichte bzw. Wärmeübertragung an das innere Kühlmedium, was durch erhöhte Dampfbildung ausgeglichen wird, wodurch die Temperaturdifferenz im gesamten Verdichtungsbereich der Einrichtung im Wesentlichen konstant bleibt.

In einer speziellen Ausführungsform zieht der Rotationskondensator bzw. die Kühlungseinheit vorzugsweise Umgebungsluft als Kühlmittel an, die durch um die Welle, insbesondere die Kühlungswelle, gelegte bzw. an diese angeordnete schraubenförmig geformte und raumfeste Schaufeln auf Rotationsgeschwindigkeit gebracht wird. Auf diese Weise wird ein Ansaugeffekt erzeugt und die Beschleunigungsverluste an den Scheiben werden vermeiden. Die Luft verlässt den Rotationskondensator durch bevorzugt tangential ausgerichtete Öffnungen am äußeren Rand des Kühlmittelaufnahmeraums bzw. des Turbinengehäuses in dem Fall, dass die Elemente der erfindungsgemäßen Einrichtung eine bauliche Einheit ausbilden. Im Prinzip könnte auch eine Kühlflüssigkeit alternativ zu Umgebungsluft als Kühlmittel angesaugt werden

Der Effekt der erfindungsgemäßen Einrichtung zur Umwandlung thermischer Energie in mechanische Energie besteht insbesondere darin, dass durch den hohen Wirkungsgrad der integrierten Scheibenläuferturbine auch die gesamte Einrichtung mit einem hohen Wirkungsgrad betrieben werden kann, sodass ein relativ geringer thermischer bzw. chemischer Energieeintrag notwendig ist, um mechanische bzw. elektrische Energie gewünschter Menge zur Verfügung zu stellen.

In einer speziellen Ausführungsform der erfindungsgemäßen Einrichtung ist im hohlen Verbindungsraum des Wellenabschnitts stationär ein Propellerelement angeordnet, sodass bei um den Propeller relative Rotationsbewegung der Welle eine im Wesentlichen axiale Strömungsbewegung des Kühlmediums in der Welle realisierbar ist.

Ein vierter Aspekt der Erfindung ist ein Verfahren zur Umwandlung thermischer Energie in mechanische Energie, bei dem in einer erfindungsgemäßen Einrichtung zur Umwandlung thermischer Energie in mechanische Energie das erfindungsgemäße Verfahren zum Betrieb einer Scheibenläuferturbine durchgeführt wird. Dabei wird in wenigstens einer Verdichterscheibe, insbesondere dem Hohlraum einer Verdichterscheibe, erwärmtes Kühlmedium wenigstens einer Kühlungsscheibe, insbesondere aus dem Hohlraum einer Kühlungsscheibe, zugeführt und dort abgekühlt. Nach der Abkühlung des Kühlmediums wird dieses wieder einer Verdichterscheibe zugeführt.

Mit anderen Worten wird in erfindungsgemäßen Verfahren in der Verdichterscheibe bzw. den Verdichterschreiben erwärmte Kühlflüssigkeit der Kühlungsscheibe bzw. den Kühlungsscheiben zugeführt und dort abgekühlt, und nach der Abkühlung wieder der Verdichterscheibe bzw. den Verdichterscheiben zugeführt.

Ein fünfter Aspekt der Erfindung ist ein Verfahren zur Umwandlung thermischer Energie in elektrische Energie, bei dem das erfindungsgemäße Verfahren zur Umwandlung thermischer Energie in mechanische Energie durchgeführt wird und kinetische Energie der rotierenden Welle mittels eines Generators in elektrische Energie umgewandelt wird.

Die Erfindung wird im Folgenden anhand der in den beiliegenden Zeichnungen dargestellten Ausführungsbeispiele erläutert.

Es zeigen
Fig. 1: einen Ausschnitt einer erfindungsgemäßen Scheibenläuferturbine;
Fig. 2: in einer Ausgestaltungsform der erfindungsgemäßen Einrichtung zur Umwandung thermischer Energie in mechanische Energie in idealisierter Weise das Zusammenwirken einer Verdichterscheibe und einer Kühlungsscheibe;
Fig. 3: einen Ausschnitt einer Ausgestaltungsform der erfindungsgemäßen Einrichtung zur Umwandlung thermischer Energie in mechanische Energie mit je drei Verdichter- und Kühlungsscheiben;
Fig. 4: einen Schnitt senkrecht zur Rotationsachse durch die Welle einer erfindungsgemäßen Einrichtung;
Fig. 5: eine Ausführungsform der erfindungsgemäßen Einrichtung zur Umwandlung thermischer Energie in mechanische Energie, bei der Scheibenläuferturbine, Verdichtereinheit und Kühlungseinheit in einem Gehäuse angeordnet sind;
Fig. 6: einen Schnitt durch der erfindungsgemäßen Scheibenläuferturbine senkrecht zur Rotationsache;
Fig. 7: eine Ausführungsform des erfindungsgemäßen Verfahrens zu Umwandlung thermischer Energie in elektrische Energie als Anlagenfließbild;
Fig. 8: ein p-V-Diagramm für Entspannung und Verdichtung des ersten Arbeitsmediums im Hochdruck bzw. Hochtemperaturbereich gemäß Figur 7;
Fig. 9: e das zur Figur 8 zugehörige T-s-Diagramm für Entspannung und Verdichtung des zweiten Arbeitsmediums im Hochdruck- bzw. Hochtemperaturbereich gemäß Figur 7;
Fig. 10: ein p-V-Diagramm für Entspannung und Verdichtung des zweiten Arbeitsmediums im Niederdruck- bzw. Niedertemperaturbereich gemäß Figur 7 sowie
Fig. 11: das zur Figur 10 zugehörige T-s-Diagramm für Entspannung und Verdichtung des zweiten Arbeitsmediums im Niederdruck- bzw. Niedertemperaturbereich gemäß Figur 7.

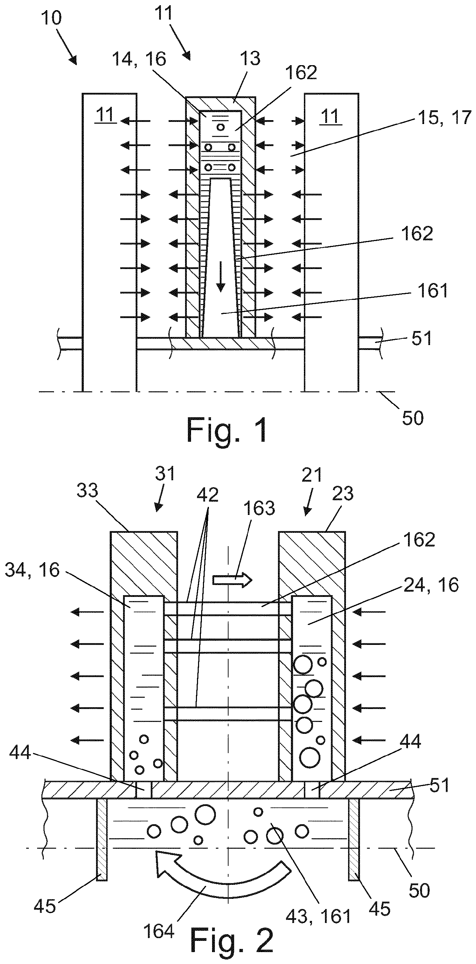

Figur 1 zeigt einen Ausschnitt einer erfindungsgemäßen Scheibenläuferturbine 10. Dargestellt sind drei rotationsfest auf einer Welle 51 angeordnete Scheiben 11, welche um die Rotationsachse 51 rotieren. Die mittlere der drei im Wesentlichen runden Scheiben 11 ist im Schnitt dargestellt. Es ist zu erkennen, dass der die Scheibe 11 ausbildende Scheibenkörper 13 einen Hohlraum 14 aufweist, in welchem ein Kühlmedium 16, insbesondere eine Kühlflüssigkeit, aufgenommen ist. Im Scheibenzwischenraum 15 liegt heißes Gas 17 vor, welches beim Eintritt in die Scheibenläuferturbine 10 die Scheiben 11 bevorzugt an ihrer äußeren Mantelfläche tangential anströmt und die Scheiben 11 damit in Rotation um die Rotationsachse 50 versetzt. Das Gas 17, welches die Scheiben 11 an- bzw. umströmt wird auch als Arbeitsmedium bezeichnet. Dabei kann es sich um ein Rauchgas aus einem Verbrennungsprozess oder alternativ um ein Edelgas wie beispielsweise Xenon handeln. Das Gas 17 ist typischerweise mehr als 100°C heiß und weißt gegenüber den Umgebungsbedingungen einen erhöhten Druck auf. Im Betrieb der Scheibenläuferturbine 10 gibt das Gas 17 Energie an die Scheiben 11 ab. Die Scheiben 11 werden durch das Gas 17 im Betrieb erwärmt. Das Kühlmedium 16 im Hohlraum 14 dient der Kühlung der Scheiben 11 während des Betriebs. Das Kühlmedium 16 ist beispielsweise Wasser, wobei andere organische oder anorganische Substanzen oder Substanzgemische nicht ausgeschlossen sind.

Figur 1 illustriert den Kühlungsvorgang der Scheiben 11 in idealisierter Weise. Vornehmlich im radial äußeren Bereich, in dem das Gas 17 bevorzugt in die erfindungsgemäße Scheibenläuferturbine 10 eintritt, wird Wärme vom im Scheibenzwischenraum 15 befindlichen Gas 17 an den Scheibenkörper 13 und in der Folge an das im Hohlraum 14 befindliche Kühlmedium 16 abgegeben. Dieser Wärmestrom ist in Figur 1 durch auf den Hohlraum 14 der Scheiben 11 gerichtete Pfeile angedeutet. Im radial äußeren Bereich des Hohlraums 14 liegt das Kühlmedium 16 vornehmlich als flüssiges Kühlmedium 162 vor. Durch den Wärmeeintrag kommt es zu einer Verdampfung des flüssigen Kühlmediums 162. Das nunmehr in gasförmiger Form bzw. als Dampf vorliegende Kühlmedium 161 strömt im Inneren des Hohlraums 17 nach radial innen. Diese Strömungsbewegung ist in Figur 1 durch einen auf die Welle 51 gerichteten Pfeil angedeutet. In wellennähe kommt es zu einer Kondensation des Kühlmediums 16, sodass an den Wandungen des Hohlraums 14 ein Film aus flüssigem Kühlmedium 162 ausgebildet wird. Die bei der Kondensation freiwerdende Wärme wird wiederum am Scheibenkörper 13 an das im Scheibenzwischenraum 15 befindliche Gas 17 abgegeben. Dieser Wärmestrom ist in Figur 1 durch auf den Scheibenzwischenraum 15 gerichtete Pfeile angedeutet. Der Film aus flüssigem Kühlmedium 162 bewegt sich bedingt durch den Dichteunterschied der Phasen und die durch die Rotation erzeugten Zentrifugalkräfte nach radial außen, wo das flüssige Kühlmedium 162 erneut verdampft wird. Auf diese Weise ist eine interne Kühlung der Scheiben 11 der Scheibenläuferturbine 10 realisiert.

Mit anderen Worten sind die Scheiben 11 der erfindungsgemäßen Scheibenläuferturbine 10 derart gestaltet, dass sie über einen internen Fluidkreislauf bzw. Kühlmediumkreislauf im Hohlraum 14 verfügen, sodass es im äußeren Bereich zur Verdampfung und im zentralen, also radial inneren Bereich zur Kondensation des Kühlmediums 16 kommt als Folge von externer Wärmezufuhr durch und Wärmeabfuhr an ein umgebendes Gas 17, beispielsweise ein heißes Rauchgase, welches als Arbeitsmedium zur Gewinnung von mechanischer Energie verwendet wird.

Der Scheibenkörper 13 besteht typischer- aber nicht notwendigerweise im Wesentlichen aus einem Metall. Die Festigkeit von Metallen ist prinzipiell von der Temperatur abhängig und nimmt mit Temperatur des Gases 17 ab. Die erfindungsgemäße Scheibenläuferturbine 10 ermöglicht es, durch die interne Kühlung mittels des Kühlmediums 16, die Verwendung leichter Materialien mit geringer Festigkeit für die Ausgestaltung des Scheibenkörpers 13 vorzusehen.

Figur 2 zeigt in idealisierter Weise das Zusammenwirken einer Verdichterscheibe 21 und einer Kühlungsscheibe 31. Die Scheibenkörper 22, 32 beider Scheiben 21, 31 bilden jeweils einen Hohlraum 24, 34 aus. Die Hohlräume 24, 34 der Verdichterscheibe 21 und der Kühlungsscheibe 31 sind mittels Querstegen 42 strömungstechnisch miteinander verbunden. Dies bedeutet, dass das in den beiden Hohlräumen 24, 34 vorliegende Kühlmedium 16 zwischen den Hohlräumen 24, 34 fließen kann. Mit anderen Worten bilden die parallel zur Rotationsachse 50 ausgerichteten Querstege 42 eine erste strömungstechnische Verbindung aus.

Beide in Figur 2 gezeigten Scheiben 21, 31 sind rotationsfest auf einer Welle 51 angeordnet, welche um eine Rotationsachse 50 rotiert. Über die Wellenabschnittsbegrenzungen 45 bildet die Welle 51 in ihrem Inneren einen hohlen Verbindungsraum 43 aus. Der hohle Verbindungsraum 43 ist über die Öffnungen 44 sowohl mit der Kühlungsscheibe 31 als auch mit der Verdichterscheibe 21 strömungstechnisch verbunden. Auf diese Art ist eine zweite strömungstechnische Verbindung ausgestaltet.

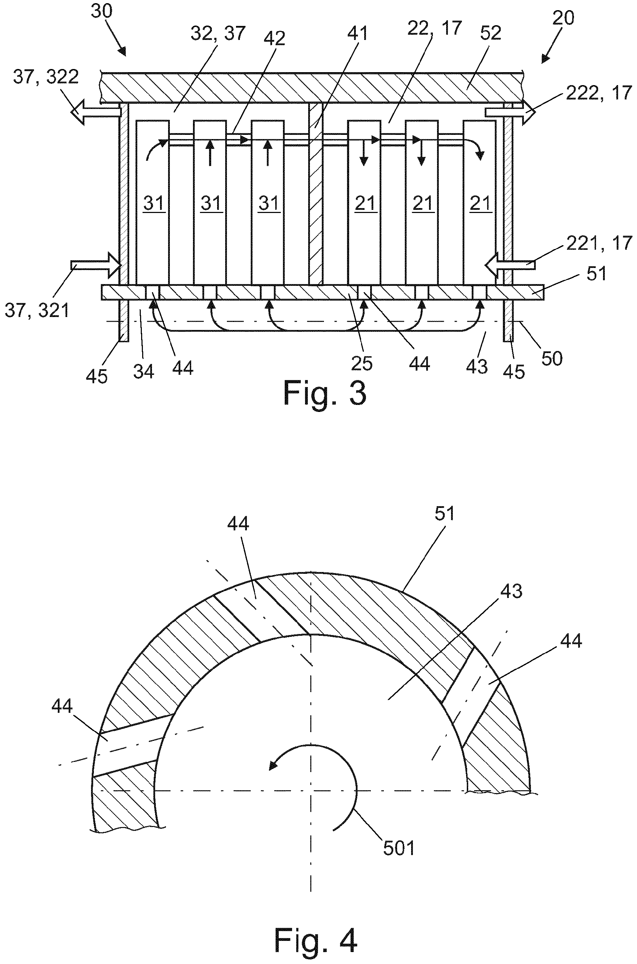

Der Wärmestrom in dem die Scheiben 21, 31 umgebenden Raum ist in Figur 4 durch Pfeile angedeutet. Im Bereich der Verdichterscheibe 21 ist das die Scheibe umgebende Gas wärmer als im Bereich der Kühlungsscheibe 31. Durch den Wärmegang von Wärme aus dem umgebenden Gas an die Verdichterscheibe 21 kommt es zu einer Verdampfung des sich im Hohlraum 24 der Verdichterscheibe 21 befindlichen Kühlmediums 16. In vergleichbarer Weise zu dem in Figur 1 illustrierten Prozess, strömt der in gasförmiger Phase vorliegende Anteil des Kühlmediums 16 nach radial innen und durch die Öffnung 44, welche den Hohlraum 24 der Verdichterscheibe 21 mit dem hohlen Verbindungsraum 43, in den hohlen Verbindungsraum 43 der Welle 51. Im hohlen Verbindungsraum 43 fließt das Kühlmedium 16, welches hier vornehmlich als gasförmiges Kühlmedium 161 vorliegt, in einem zweiten Kühlmediumstrom 164 Richtung der Kühlungsscheibe 31 und durch die

Öffnung 44, welche den Hohlraum 34 der Kühlungsscheibe 31 mit dem hohlen Verbindungsraum 43 verbindet, in den Hohlraum 34 der Kühlungsscheibe 31. Insbesondere hier kommt es zu einer Abkühlung und in der Folge zu einer Kondensation wenigstens eines Teils des gasförmigen Kühlmediums 161. Das nunmehr im Wesentlichen flüssige Kühlmedium 162 wird rotationsbedingt nach radial außen bewegt und fließt durch die Querstege 42 in einem ersten Kühlmediumstrom 163 in den Hohlraum 24 der Verdichterscheibe 21, wo es erneut erwärmt und verdampft wird. Auf diese Weise ist ein geschlossener Kühlmedienkreislauf zwischen einer Verdichterscheibe 21 und einer Kühlungsscheibe 22 prinzipiell realisierbar. Der in Figur 2 dargestellte Vorgang ist als idealisierter Vorgang zu verstehen.

Figur 3 zeigt einen Ausschnitt einer Ausgestaltungsform der erfindungsgemäßen Einrichtung zur Umwandlung thermischer Energie in mechanische Energie. Dargestellt ist hier das Zusammenwirken einer Verdichtereinheit 20 mit einer Kühlungseinheit 30. Jede der beiden Einheiten 20, 30 verfügt exemplarisch über je drei Scheiben 21, 31, welche rotationsfest auf einer Welle 51 angeordnet sind. Deren in Figur 3 nicht dargestellte Hohlräume sind zur Ausbildung einer ersten strömungstechnischen Verbindung, in diesem Beispiel mittels eines Querstegs 42, miteinander verbunden. Eine zweite strömungstechnische Verbindung wird über den hohlen Verbindungsraum 43 und die Öffnungen 44 realisiert.

In vergleichbarer Weise zu dem in Figur 2 illustrierten Vorgang, strömt das Kühlmedium 16, das in den Hohlräumen 24, 34 der Scheiben 21, 31 vorliegt, in einem Kreislauf. Dieser Kreislauf ist in Figur 3 über Pfeile dargestellt.

Die Verdichtereinheit 20 und die Kühlungseinheit 30 weisen ein gemeinsames Gehäuse 52 auf. Durch ein Trennelement 41 bilden beide Einheiten 20, 30 je einen separaten Aufnahmeraum 22, 32 aus. Das heißt, dass die Kühlungsscheiben 31 in einem Kühlmittelaufnahmeraum 32 und die Verdichterscheiben 21 in einem Verdichtergasaufnahmeraum 22 angeordnet sind. Die beiden Aufnahmeräume 22, 32 sind durch das Trennelement 41 derart voneinander getrennt, dass im Wesentlichen kein Austausch der sich in den Aufnahmeräumen 22, 32 befindlichen Medien stattfindet.

In die Verdichtereinheit 20 tritt in der dargestellten Ausführungsform durch einen Gasvolumenstromeintritt, welcher bevorzugt in einem radial inneren Bereich der Verdichtereinheit 20 angeordnet ist, ein erwärmtes Gas 17 bzw. Arbeitsmedium ein. Das Gas 17 gibt in der Verdichtereinheit 20 Wärme an die Verdichterscheiben 21 ab. Dabei wird das sich im Inneren der Verdichterscheiben 21 vorliegende Kühlmedium 16 erwärmt und bevorzugt verdampft. Das nunmehr gegenüber der Gaseintrittstemperatur kältere Gas 17 verlässt den Verdichtergasaufnahmeraum 22 durch einen Gasvolumenstromaustritt 222, welcher bevorzugt im radial äußeren Bereich der Verdichtereinheit 20 angeordnet ist.

Das erwärmte und wenigstens teilweise verdampfte Kühlmedium 16 strömt im Inneren der Verdichterscheiben 21 nach radial innen und durch die Öffnungen 44 eines von einer jeweiligen Verdichterscheibe 21 abgedeckten Wellenbereichs 25 in den hohlen Verbindungsraum 43 im Inneren der Welle 51, welcher durch die Wellenabschnittsbegrenzungen 45 begrenzt ist. Vom hohlen Verbindungsraum 43 strömt das Kühlmedium 16 durch Öffnungen 44 eines von einer jeweiligen Kühlungsscheibe 31 abgedeckten Wellenbereichs 35 in den Hohlraum 34 der jeweiligen Kühlungsscheibe 31 der Kühlungseinheit 30. Die Kühlungsscheiben 30 sind in einem Kühlmittelaufnaheraum 32 angeordnet. In den Kühlmittelaufnaheraum 32 tritt über einen bevorzugt wellennah angeordneten Kühlmitteleintritt 321 ein Kühlmittel 37 ein. Während das Kühlmedium 16 im Inneren der Scheiben 21, 31 bevorzugt eine Kühlflüssigkeit ist, welche verdampft werden kann, kann als Kühlmittel 37 auch Umgebungsluft eingesetzt werden. Es ist jedoch nicht ausgeschlossen, dass auch das Kühlmittel 37 eine Kühlflüssigkeit ist. Insbesondere ist nicht ausgeschlossen, dass das Kühlmittel 37 dieselbe stoffliche Zusammensetzung aufweist wie das Kühlmedium 16.

Über die Scheibenkörper der Kühlungsscheiben 31 wird Wärme vom Kühlmedium 16 an das Kühlmittel 37 abgeben. Insbesondere wird so viel Wärme abgegeben, dass das Kühlmedium 16 kondensiert und von der gasförmigen in die flüssige Phase übergeht. Bedingt durch die Dichteunterschiede zwischen den Phasen und aufgrund der Rotation wirkenden Zentrifugalkräfte wird das flüssige Kühlmedium 16 im Inneren nach radial außen bewegt.

Die Rotation der Scheiben 21, 31 ist dadurch bedingt, dass die Welle 51, auf der die Scheiben 21, 31 angeordnet sind, mit einer Turbine, insbesondere einer erfindungsgemäßen Scheibenläuferturbine 10, rotationsfest verbunden ist. In Figur 3 ist diese Verbindung nicht dargestellt.

Figur 4 zeigt einen Schnitt senkrecht zur Rotationsachse 51 durch die Welle 51 an der die Kühlungsscheiben (hier nicht dargestellt) rotationsfest angeordnet sind. Der dargestellte Schnitt liegt einer Ebene in der die Öffnungen 44 angeordnet sind. Es ist zu erkennen, dass die Welle 51 in ihrem Inneren einen hohlen Verbindungsraum 43 aufweist. Ferner ist zu erkennen, dass die Öffnungen 44 in regelmäßigen Abständen auf dem Umfang der Welle 51 angeordnet sind. In der vorliegenden Ausführungsform handelt es sich bei den Öffnungen 44 um zylindrische Bohrungen. Dabei verläuft die Achse einer jeweiligen Bohrung geneigt in Bezug zu einer radialen Richtung. Ein Winkel, der zwischen der Achse der Bohrung und dem Radius der Welle 51 ausgebildet wird, ist in Richtung der Rotation 501 spitz.

Die Öffnungen 44 sind im vorliegenden Beispiel so zu gestalten, dass im Abstrom hinter den Öffnungen 44 kein allzu großer Stoßverlust eintritt. Der Eintritt in den Hohlraum der Kühlungsscheibe (hier nicht dargestellt) ist vorzugsweise so zu gestalten, dass eine gewisse Voreilung am Eintritt erzeugt wird, um die Arbeitsaufnahme des Kühlmediums (hier nicht dargestellt) zu verringern.

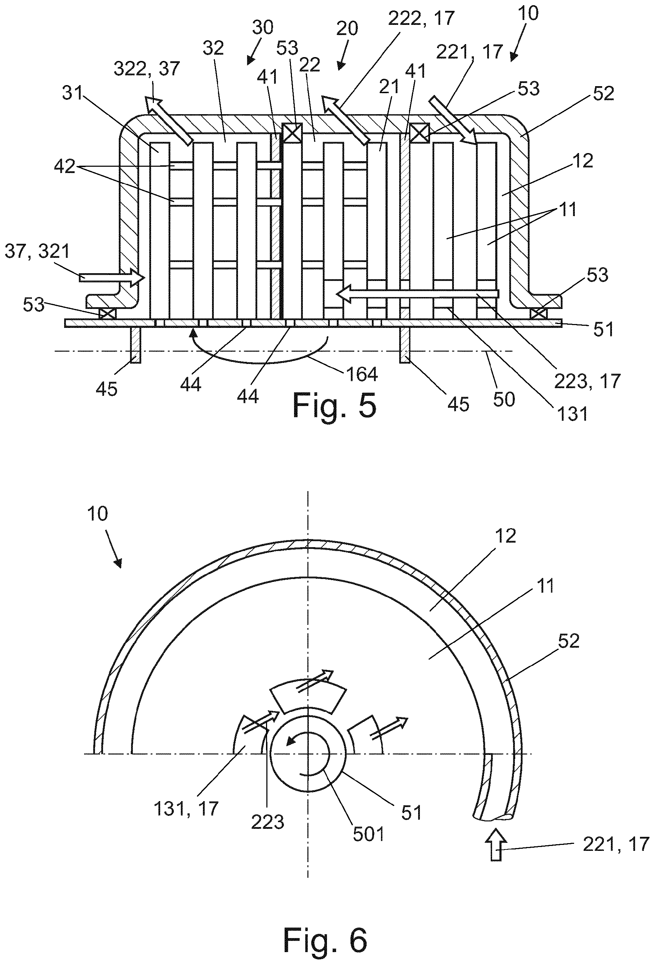

Figur 5 zeigt eine Ausführungsform der erfindungsgemäßen Einrichtung zur Umwandlung thermischer Energie in mechanische Energie. In der dargestellten Ausführungsform sind die Scheibenläuferturbine 10, die Verdichtereinheit 20 und die Kühlungseinheit 30 in einem Gehäuse 52 angeordnet. Zwischen dem Gehäuse 52 und der rotierenden Welle 51 sind Abdichtungen 53 angeordnet.

Die Scheibenläuferturbine 10 umfasst in der dargestellten Ausführungsform zwei Scheiben 11. Die Scheiben 11 verfügen bevorzugt über eine Scheibenkühlung entsprechend der Darstellung in Figur 1. Das Gas 17 tritt über den Gasvolmenstromeintritt 221 in den Gasaufnahmeraum 12 der Scheibenläuferturbine 10 ein und strömt dabei die Scheiben 11 bevorzugt tangential an. Die Scheiben 11 werden dadurch in Rotation um die Rotationsachse 50 versetzt. Sowohl die Scheiben 11, als auch die Verdichterscheiben 21 und die Kühlungsscheiben 31 sind auf einer gemeinsamen Welle 51 rotationsfest angeordnet. Folglich führt eine Rotation der Scheiben 11 zu einer Rotation der Verdichterscheiben 21 und der Kühlungsscheiben 31. In der Scheibenläuferturbine 10 wird das Gas 17 wenigstens teilweise entspannt und kühlt ab.

Das Gas 17 strömt über einen wellennah angeordneten Gasvolumenstromübergang 223 in den Verdichtergasaufnahmeraum 22 der Verdichtereinheit 20. Zwecks Ermöglichung dieses Gasstroms weisen die Scheiben 11 in einem wellennahen Bereich Scheibenöffnungen 131 auf. Das Trennelement 41 zwischen Gasaufnahmeraum 12 und Verdichtergasaufnahmeraum 22 weist wellennah ebenfalls wenigstens einen Durchbruch auf. Im radial äußeren Bereich ist in der dargestellten Ausführungsform gasaufnahmeraumseitig eine Abdichtung 53 angeordnet.

In der Verdichtereinheit 20 gibt das entspannte Arbeitsmedium bzw. Gas 17 Wärme an die Verdichterscheiben 21 ab. Die Verdichterscheiben 21 verfügen, wie in Figur 2 dargestellt, über einen hier nicht dargestellten Hohlraum, in welchem ein Kühlmedium 16 aufgenommen ist. Bei dem Kühlmedium 16 kann es sich um dasselbe Kühlmedium 16 handeln, welches in den Hohlräumen der Scheiben 11 der Scheibenläuferturbine 10 aufgenommen ist. Das Kühlmedium 16 im Inneren der Verdichterscheiben wird mittels der Wärme aus dem Gasvolumenstrom 17 verdampft. Letzteres wird in der Verdichtereinheit 20 verdichtet und strömt über den Gasvolumenstromaustritt 222 aus der Verdichtereinheit 20 und kann zwecks erneuter Erwärmung eines hier nicht dargestellten Brenners bzw. einer Wärmetauschereinrichtung zugeführt werden.

Neben der Verdichtereinheit 20 ist im selben Gehäuse 52 eine Kühlungseinheit 30 angeordnet. Der Kühlmittelaufnahmeraum 32 der Kühlungseinheit 30 ist vom Verdichtergasaufnahmeraum 22 der Verdichtereinheit 20 mittels eines Trennelements 41 getrennt. Zusätzlich ist auch hier radial außen verdichtergasaufnahmeraumseitig eine Abdichtung 53 vorgesehen. Analog zur Darstellung in Figur 3 sind Hohlräume der Verdichterscheiben 21 mittels Querstegen 42 in einer ersten strömungstechnischen Verbindung mit hier nicht dargestellten Hohlräumen der Kühlungsscheiben 31 verbunden, wobei in dieser Ausführungsform drei parallel angeordnete Querstegverbindungen vorgesehen sind. Ebenfalls analog zu Figur 3, ist eine zweite strömungstechnischen Verbindung zwischen den Hohlräumen der Verdichterscheiben 21 und der Kühlungsscheiben 31 über die Öffnungen 44 und den über die Wellenabschnittsbegrenzung 45 ausgebildeten hohlen Verbindungsraum 43 ausgebildet. Das Kühlmedium 16 kann somit zwischen der Verdichtereinheit 20 und der Kühlungseinheit 30 bzw. deren Scheiben 21, 31 im Kreislauf geführt werden.

Ebenfalls in Figur 5 dargestellt ist der wellennahe Kühlmitteleintritt 321. In der Kühlungseinheit 30 wird die Wärme des in der Verdichtereinheit 20 erwärmten Kühlmediums 16 an das Kühlmittel 37 angegeben. Insbesondere wird das Kühlmedium 16 in der Kühlungseinheit 30 kondensiert.

Figur 6 zeigt einen Schnitt durch der erfindungsgemäßen Scheibenläuferturbine 10 senkrecht zur Rotationsache 50, wie sie in der Ausführungsform gemäß Figur 5 dargestellt ist. Zu erkennen ist der tangentiale Gasvolumenstromeintritt 221 in den Gasaufnahmeraum 12, welcher radial durch das Gehäuse 52 begrenzt ist. Der Gasstrom beschleunigt dabei reibungsgedingt die Scheibe 11 und erzeugt so eine Rotation 501. Ebenfalls zu erkenn sind die nah der Welle 51 angeordneten Scheibenöffnungen 131, durch welche das Gas 17 in Richtung der Verdichtereinheit (hier nicht dargestellt) strömt. In Figur 6 ist angedeutet, dass das Gas 17 beim Durchtritt durch die Scheibenöffnung 131 eine Beschleunigung mit wenigsten einer Richtungskomponente nach radial außen entgegen der Richtung der Rotation 501 erfährt.

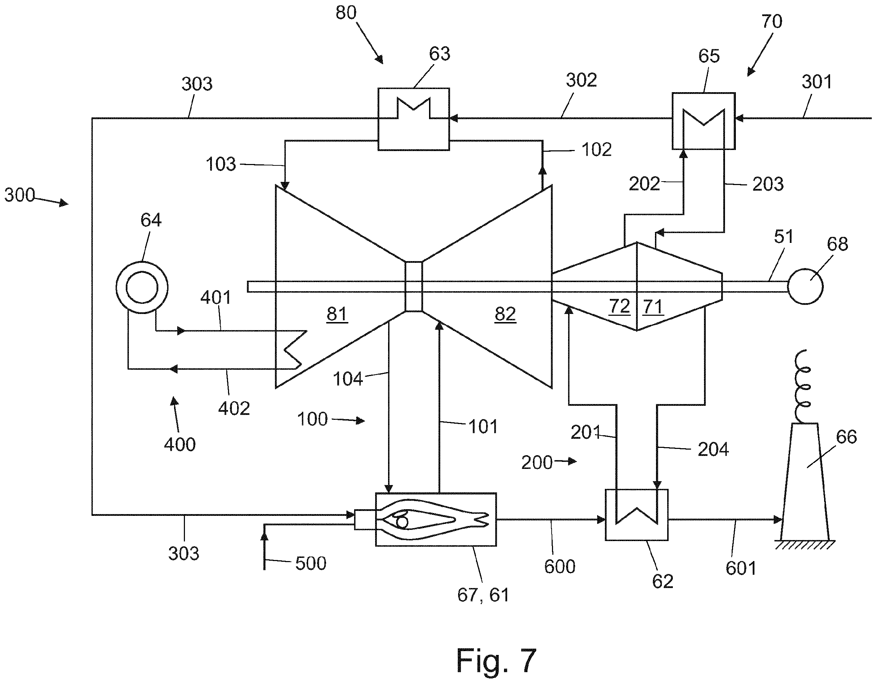

In Figur 7 ist eine Ausführungsform des erfindungsgemäßen Verfahrens zu Umwandlung thermischer Energie in elektrische Energie als Anlagenfließbild dargestellt.

Das Anlagenfließbild stellt beispielhaft einen Gleitbetrieb dar. Das heißt die Verdichtung erfolgt auf höherem Temperaturniveau, um noch Wärme für externe Nutzung auskoppeln zu können. Die im folgenden angegebenen Zahlenwerte zu Temperaturen und Drücken sind beispielhaft zu verstehen.

Das dargestellte Verfahren umfasst einen Niederdruckbereich 70 und einen Hochdruckbereich 80. Das Verfahren kann auch als Gasturbinenprozess bezeichnet werden. Zu erkenne ist eine Kreislaufführung eines ersten Arbeitsmediums 100 im Hochdruckbereich 80, sowie eines zweiten Arbeitsmediums 200 im Niederdruckbereich 70. Ebenfalls dargestellt ist die Zuführung von Verbrennungsluft 300 zu einer Brennkammer 67, die zunächst mittels eines vierten Wärmeübertragers 65 und anschließend mittels eines dritten Wärmeübertragers 63 vorgewärmt wird und als vorgewärmte Verbrennungsluft 303 der Brennkammer 67 zugeführt wird. Darüber hinaus ist der Strom eines Wärmeträgers 400 dargestellt. Das Rauchgas 600 wird, nachdem es über einen zweiten Wärmeübertrager 62 abgekühlt wurde, als abgekühltes Rauchgas 601 über einen Kamin 66 abgeführt.

In einer Brennkammer 67 wird ein Brennstoff 500 zwecks Erzeugung von Wärme verbrannt. Die Brennkammer 67 kann grundsätzlich mit einem beliebigen Brennstoff betrieben werden. Sie kann demnach mit einer Feststofffeuerung ausgestattet sein oder mit Brenner für fluide Brennstoffe. Die Wände der Brennkammer 67 werden vorzugsweise mit den zur Verfügung stehenden Medien des Prozesses, insbesondere dem ersten Arbeitsmedium 100, gekühlt oder aber aus Feuerfestmaterial gestaltet.

Zur Verbrennung werden der fiktiv adiabaten Brennkammer 67 ein Brennstoff 500 und vorgewärmte Verbrennungsluft 303 zugeleitet. Das dort gebildete Rauchgas 600 verlässt die Brennkammer 67 mit ca. 2000 °C bzw. liegt in dieser mit der entsprechenden Temperatur vor. In einem nachgeschalteten, bzw. sich an die Brennkammer direkt anschließende ersten Wärmeübertrager 61 (hier nicht im Detail dargestellt), auch Abhitzewärmeübertrager genannt, der auch partiell zur Kühlung der Brennkammerwände mit dieser konstruktiv verbunden sein kann, wird das Rauchgas 600 zunächst auf eine Temperatur von ca. 500°C abgekühlt, danach einem zweiten Wärmeübertrager 62, der auch als Economiser bezeichnet werden kann, für die Erwärmung des zweiten Arbeitsmediums 200 für die Niederdruckturbine bzw. den Niederdruckentspanner 72 zugeführt und mit ca. 100°C als das abgekühltes Rauchgas 601 in den Kamin 66 geleitet.

Die vom Rauchgas 600 abgegebene Wärme dient der Erhitzung des ersten Arbeitsmediums 100, das mit als verdichtetes erstes Arbeitsmedium 104 mit einer Temperatur von ca. 400°C in den ersten Wärmeübertrager 61, den Abhitzewärmeübertrager, eintritt und als erwärmtes Arbeitsmedium 101 mit einer Temperatur von ca. 1500°C austritt. Das erste Arbeitsmedium 100 ist vorzugsweise Xenon oder ein alternatives Edelgas. Das erwärmte sowie das verdichtete erste Arbeitsmedium 101, 104 stehen unter einem Druck von ca. 15 bar ohne Berücksichtigung von minimalen Druckdifferenzen, die infolge des Transportes auftreten. In einem Hochdruckentspanner 82 wird das erste Arbeitsmedium 101 auf einen Druck von 1 bar abgesenkt, wobei es zugleich auf eine Temperatur von ca. 400°C abgekühlt wird, bevor es den Hochdruckentspanner 82 als entspanntes erstes Arbeitsmedium 102 verlässt. Der Entspannungsprozess erfolgt bevorzugt teilweise oder vollständig isotherm bei einer Arbeitstemperatur, die höher liegt als 400°C, aber nicht bei höheren Temperaturen als der Eintrittstemperatur des Arbeitsmediums 101. Der Hochdruckentspanner 82 umfasst in dieser Ausführungsform des Verfahrens wenigstens eine erfindungsgemäße Scheibenläuferturbine (hier nicht dargestellt) bzw. wir durch eine solche ausgebildet. Das erste Arbeitsmedium 100 entspricht folglich dem Gasvolumenstrom bzw. dem Gas in den Figuren 1 bis 6.

Das Niveau der Arbeitstemperatur im Hochdruckeintspanner 82 hängt vom ausgewählten Kühlmedium und vom Material der Entspannerscheiben bzw. Scheiben der Scheibenläuferturbine ab.

Die abgegebene Wellenarbeit wird auf einen Generator 68 über die Welle 51 übertragen, in dem eine Wandlung in elektrische Energie erfolgt. Innerhalb der Entspannungsstufe wird das erwärmte erste Arbeitsmedium 101 zunächst auf eine Arbeitstemperatur abgesenkt, wobei die abgeführte Wärme bei der eigentlichen Entspannung dem erwärmte ersten Arbeitsmedium 101 wieder zugeführt wird. Auf diese Weise bleibt die Temperatur bei der Entspannung nahezu konstant. Die Endphase der Entspannung erfolgt nahezu isentrop, um exergetische Verluste zu minimieren.

Das entspannte erste Arbeitsmedium 102 wird in einem dritten Wärmeübertrager 63, der als Luftvorwärmer für den Verbrennungsprozess fungiert, bei etwa gleichem Druck weiter auf ein abgekühltes erstes Arbeitsmedium 103 mit einem Temperaturniveau von 80 bis 200°C abgekühlt, wonach es in einen Hochdruckverdichter 81 eintritt. Im Hochdruckverdichter 81, welcher bevorzugt als Verdichtereinheit ausgeführt ist, erfolgt eine isotherme Druckanhebung auf 15 bar, wobei die Druckanhebung in der Endphase dieses Prozessschrittes auch isentrop erfolgen kann, entsprechend würde die Temperatur um ein gewisses Maß ansteigen. In welchem Maß dies zugelassen wird hängt davon ab, aus welchem Material die Verdichterscheiben 21 im Hochdruckverdichter 81 ausgeführt sind und welcher exergetische Verlust hinsichtlich der Wärmeübertragung akzeptierbar ist. Die Verdichterscheiben 21 werden durch ein intern in den Verdichterscheiben 21 bzw. im Hohlraum 24 der Verdichterscheiben 21 umlaufendes Kühlmedium 16 gekühlt. Dieses Kühlmedium 16 gibt seine Wärme an einen aus der Umgebung kommenden Wärmeträger 400 ab. Der kühle Wärmeträger 401 wird dabei von einer Wärmesenke 64 kommend, dem Hochdruckverdichter 81 zugeführt, hier erwärmt und auf als warmer Wärmeträger 402 mit erhöhtem Temperaturniveau der Wärmesenke 64 wieder zugeführt. Der Wärmeträger 400 ist typischerweise Umgebungsluft oder Wasser. Das verdichtete erste Arbeitsmedium 104 wird dem ersten Wärmeübertrager 61 zugeführt, womit der Kreislauf dieses ersten Arbeitsmediums 100 geschlossen ist.

Im Niederdruckbereich 70 verlässt das Rauchgas 600 die Brennkammer 67 bei einer Temperatur von 500°C. In der dargestellten Ausführungsform wird dieses Temperaturniveau in einem zweiten Gasturbineprozess, die bei niedrigem Druck genutzt. Die Niederdruckturbine besteht analog zur Hochdruckturbine aus einem Niederdruckentspanner 72, der bei ca. 400°C und 5 bar arbeitet und einem Niederdruckverdichter 71, der isotherm ausgeführt wird und am dessen Austritt ein verdichtetes zweites Arbeitsmedium 204 mit einer Temperatur von ca. 50°C und einem Druck von ca. 5 bar austritt. Im dargestellten Ausführungsbeispiel sind Niederdruckturbine und Hochdruckturbine auf derselben Welle 51 angeordnet.

Dieser Niederdruckentspanner 72 ist in analoger Weise mit gekühlten Scheiben ausgeführt wie der Hochdruckentspanner 82 des Hochdruckbereichs 80. Die Abhitze des Niederdruckentspanners 72 wird zur Aufwärmung der Umgebungsluft 301 mit ca. 10°C auf eine zwischenerwärmte Verbrennungsluft 302 mit ca. 80°C in einem vierten Wärmeübertrager 65, der auch als Niedertemperaturvorwärmer zu bezeichnen ist, genutzt. Die Umgebungsluft 301 fällt mit ca. 10°C an, sodass das das entspannte zweite Arbeitsmedium 202, welches vorzugsweise ebenfalls Xenon oder ein anderes Edelgas ist, auf ein abgekühltes zweites Arbeitsmedium 203 mit ca. 20°C abgekühlt werden kann. Der erforderliche Kühlstrom für die den Niederdruckverdichter 71 kommt aus der Umgebung und ist thermisch wertlos. Auch die Niedertemperaturturbine könnte im Gleitbetrieb gefahren werden, um Prozesswärme auszukoppeln.

Alternativ zur Niedertemperaturgasturbine könnte auch ein Rankineprozess gestaltet werden. Hierdurch entstünde der Vorteil, dass Dampf erzeugt würde, der für besondere Prozesszwecke nutzbar ist.

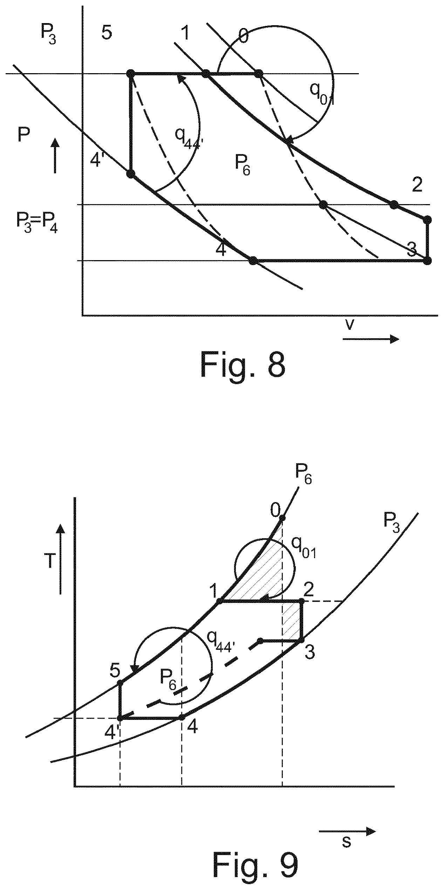

Abbildung 8 ein p-V-Diagramm für Entspannung und Verdichtung des ersten Arbeitsmediums im Hochdruck bzw. Hochtemperaturbereich gemäß Figur 7. Abbildung 9 zeigt das zur Figur 8 zugehörige T-s-Diagramm für Entspannung und Verdichtung des zweiten Arbeitsmediums im Hochdruck- bzw. Hochtemperaturbereich gemäß Figur 7.

Dem p-V-Diagramm lassen sich die Integrale für die zuzuführende und gewonnene technische Arbeit ablesen. Aus dem T-s-Diagramm lassen sich die entsprechenden Wärmeintegrale für Wärmezu- und Wärmeabfuhr ablesen. Nach der partiellen isothermen Verdichtung, welches in Figur 8 und 9 der Zustandsänderung von 3 nach 4 entspricht, wird das Arbeitsmedium isentrop weiter auf die Endtemperatur bzw. den Enddruck verdichtet, welches in Figur 8 und 9 der Zustandsänderung von 4 nach 5 entspricht. Alternativ dazu könnte auch gleich vollständig isotherm verdichtet werden, was in Figur 8 und 9 der Zustandsänderung von 3 nach 5 entspricht, allerdings würde dies eine stärkere Kühlung erfordern. Die so entstehende höhere Kühlenergie würde vorzugsweise der Brennkammer von der Verbrennungsluft, die ohnehin die Energie der Zustandsänderung von 3 nach 4 aufnimmt, zusätzlich aufgenommen werden. Es käme dadurch zu gewissen exergetischen Einbußen durch Übertragungsverluste, es kann aber konstruktive und somit auch ökonomische Vorteile haben, so zu verfahren.

Nach der isobaren Abkühlung wird das erste Arbeitsmedium isotherm verdichtet, wobei die Verdichtung auch hier nur partiell isotherm erfolgen könnte, wenn zugelassen würde, dass in der Endphase dieses Schrittes eine isentrope Verdichtung erfolgt. Diesen Freiheitsgrad benötigt man, um wie im Falle der Hochtemperaturverdichtung die Konstruktion wirtschaftlich zu optimieren. Diesen Fall stellt in Figur 8 und 9 die untere Begrenzungslinie für die Verdichtung dar. Die darüber liegenden Begrenzungslinien stellen beispielhaft den Gleitbetrieb dar. Die Eintrittstemperatur in den Entspanner könnte ebenfalls gleiten, aber es ist aus exergetischen Gründen sinnvoll, den Entspanner immer bei maximaler Temperatur zu betreiben.

Im Gegensatz zur Entspannung, bei der die Temperatur des Arbeitsmediums im isentropen Fall ständig abnimmt, nimmt die Temperatur bei isentroper Verdichtung ständig zu. Diesen Verhalten ist durch die gestrichelten Linien in den Figur 8 dargestellt. Tendenziell gilt dies auch für die partiell isothermen Prozessschritte, wobei bei der Entspannung im Bereich vom Zustand 0 nach Zustand 3 die Temperatur tendenziell abnimmt und bei der Verdichtung nimmt die Temperatur von Zustand 4 nach Zustand 5 zunimmt. Das heißt bei der Entspannung muss im Arbeitsbereich Wärme zu und bei der Verdichtung entsprechend Wärme abgeführt werden, damit jeweils isotherme bzw. wie in Figur 8 und 9 dargestellt partiell isotherme Zustandsänderungen eintreten können.

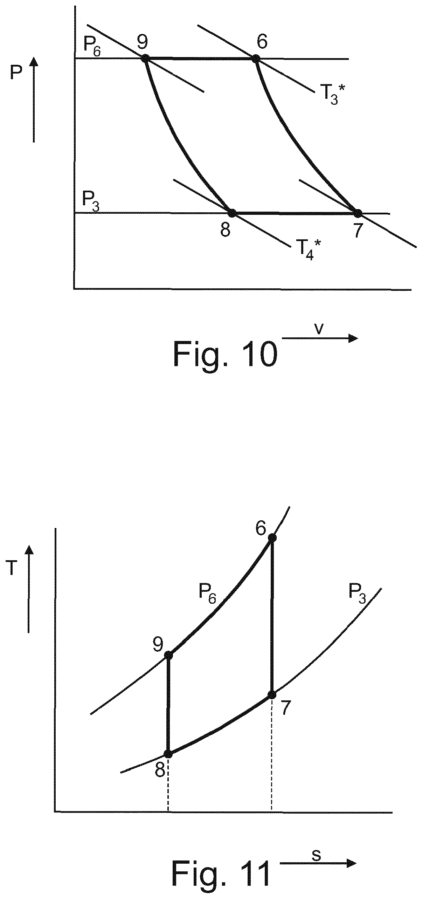

Abbildung 10 zeigt ein p-V-Diagramm für Entspannung und Verdichtung des zweiten Arbeitsmediums im Niederdruck- bzw. Niedertemperaturbereich gemäß Figur 7.

Abbildung 11 zeigt das zur Figur 10 zugehörige T-s-Diagramm für Entspannung und Verdichtung des zweiten Arbeitsmediums im Niederdruck- bzw. Niedertemperaturbereich gemäß Figur 7.

Die Funktionsweise der erfindungsgemäßen Scheibenläuferturbine und der erfindungsgemäßen Einrichtung zur Umwandlung thermischer Energie mechanische Energie, sowie der jeweiligen Verfahren zum Betrieb der erfindungsgemäßen Scheibenläuferturbine und der erfindungsgemäßen Einrichtung lässt auch sich wie folgt darstellen.

Dabei ist im Folgenden, soweit nicht anders kenntlich gemacht, unter den Begriffen Kondensator und Rotationskondensator eine Kühlungseinheit zu verstehen.

In Ausführungsformen der Erfindung gilt folgendes:
Unter dem Begriff Kühlflüssigkeit ist ein Kühlmedium zu verstehen, wobei als inneres Fluid das Kühlmedium in Hohlräumen von Scheiben, Verdichterscheiben und/oder Kühlungsscheiben zu verstehen ist. Unter einem externen Kühlmittel oder Kühlmedium ist ein Kühlmittel zu verstehen, welchen die Kühlungsscheiben an bzw. umströmt. Die Begriffe Rauchgas und Arbeitsmedium sind als Gas bzw. Gasvolumenstrom zu verstehen. Unter einem Entspanner ist im Folgenden eine Entspanner zu verstehen, der bevorzugt als erfindungsgemäße Scheibenläuferturbine, im Folgenden auch als Scheibenturbine bezeichnet, ausgeführt ist. Ein Element, welches im Folgenden als Verdichter bezeichnet wird, entspricht einer Verdichtereinheit.

### Scheibenläuferturbine:

Gasturbinen sind leistungsbegrenzt durch das Material der kraftaufnehmenden Elemente des Läufers. Dies kann durch eine interne Kühlung dieser Elemente kompensiert werden, indem Kühlmedium hindurchgeleitet und dem Strom des Arbeitsmediums überlassen werden oder durch einen konservativen Kühlprozess, bei dem das Kühlmedium erhalten bleibt.

Ersteres ist Stand der Technik, wobei als Kühlmedien Wasserdampf oder Luft verwendet werden. Zweiteres ist ebenfalls Stand der Technik allerdings mit der Einschränkung, dass das Kühlmedium, vorzugsweise Wasser, über die Läuferwelle den Schaufeln zugeführt wird und in den Schaufeln verdampft.

Der Dampf wird auf die Welle des Läufers zurückgeführt und vorzugsweise kraftableitend entspannt, kondensiert und in den Schaufeln zurückgeleitet.

Das so kondensierte Kühlmedium kann allerdings auch auf andere Weise eingesetzt werden, indem es die kraftaufnehmenden Elemente des Läufers gar nicht verlässt, sondern quasi in situ verdampft und kondensiert ähnlich wie dies bei sog. "heat-pipes" der Fall ist. Am einfachsten lässt sich dies mit rotierenden Scheiben einer Scheibenturbine (Tesla) bewerkstelligen gemäß der Darstellung in Figur 1, wobei die notwendige Bedingung ist, dass die Scheiben hohl sind und ein Kühlmedium enthalten. Da die Scheiben rotieren, wird das Kühlmedium an den Scheibenaußenrand gedrückt, wo es durch heißes Gas in der Umgebung der Scheibe verdampft. Der Dampf hat eine wesentlich geringere Dichte als die Flüssigkeit, so dass er stets von Flüssigkeit verdrängt werden kann. Dies kommt dem Umstand entgegen, dass die Wärmestromdichten am äußeren Rand der Scheibe besonders hoch sind, die Flüssigkeit aber in der Lage ist, hohe Wärmestromdichten aufzunehmen, ohne Dampfpolster zu bilden.

Der Dampf wird aus Kontinuitätsgründen in den Zentralbereich der Scheibe geleitet, wo er kondensiert, da das Rauchgas in Wellennähe kälter ist. Die Wärmeströme (Aufnahme und Abgabe) sind über die Siedetemperatur, die Flüssigkeitsmenge und die Gastemperaturen so eingestellt, dass der aufnehmende gleich dem abgebenden Strom ist. Aufgrund der Wärmeabgabe im äußeren Scheibenbereich ist das Gas nicht oder nur sehr eingeschränkt in der Lage, Arbeit an der Scheibe zu leisten. D.h. in diesem Bereich findet vorwiegend Wärmeübertragung um das "innere" Medium statt. Im zentralen Scheibenbereich wird die Wärme wieder an das Gas abgegeben, was allerdings mit einer äquivalenten Arbeitsverrichtung verbunden ist. D.h. das Gas überträgt annähernd isotherm Kraft auf die Scheibe. Der Vorgang lässt sich idealisiert im p-v- und T-s- Diagramm darstellen.

In einer ersten Zustandsänderung von einem Zustand 1 zu einem Zustand 2 wird die Temperatur des Rauchgases wird von T₁, also der Temperatur im Zustand 1, auf etwa die Siedetemperatur Ts abgesenkt. Im realen Prozess würde eine gewisse kleine Temperaturdifferenz zwischen dem inneren Arbeitsmedium und dem Rauchgas bestehen bleiben. Die Wärmeübertragung findet isobar statt, also ohne dass Arbeit auf die Scheibe abgegeben wird.

Die in der einer ersten Zustandsänderung von einem Zustand 1 zu einem Zustand 2 vom inneren Fluid aufgenommene Wärme wird bei einer Zustandsänderung von einem Zustand 2 zu einem Zustand 3 bei gleichzeitiger Arbeitsverrichtung an das Rauchgas abgegeben. Die so verrichtete Arbeit ist gleich der vom inneren Fluid aufgenommenen Wärme zwischen Zustand 1 und 2. Das heißt die Zustandsänderung ist isotherm.

Da das Rauchgas gegen einen Druck von P0 arbeitet und die Wärme zur Unterstützung der isothermen Zustandsänderung verbraucht ist, kommt es bei der Zustandsänderung von einem Zustand 3 zu einem Zustand 4 zur adiabat/ isentropen Entspannung vom Druck P₃ auf P₀-P₄.

Die korrespondierende Temperatur T₄ liegt im Vergleich zu derjenigen, die sich bei vollständiger adiabat/ isentroper Entspannung zwischen den Drücken P₁ und P₀ einstellen würde, höher. Die Temperaturdifferenz zwischen T₄ und T₀ ist ein Maß für den Energieverlust, der sich als Folge der Wärmeübertragung an das innere Fluid mindestens einstellt. Die tatsächlichen Energieverluste sind noch höher, da für die Wärmeübertragung selbst eine antreibende Temperaturdifferenz erforderlich ist. Es ist anzustreben die Siedetemperatur Ts möglichst niedrig zu haben, da dann die Festigkeitswerte des Scheibenmaterials stark ansteigen, was wieder höhere Scheibendrehzahlen und damit eine Verringerung des apparativen Aufwandes für die gesamte Turbinenkonstruktion einherginge. Der Exergieverlust selbst steigt mit Annäherung von Ts an die Temperatur T₄ bzw. T₀ stark progressiv an. Der Wert T₀ würde sogar zum Erfordernis eines zusätzlichen Antriebes führen. Das heißt die Turbine stünde still.

### Materialproblem:

Das Festigkeitsverhalten von Metallen ist abhängig von der Temperatur.

Die Arbeitsfähigkeit einer Turbine lässt sich bezüglich der Aufnahmefähigkeit darstellen durch einen Proportionalitätsansatz, wobei die Festigkeit mit zunehmender Arbeitstemperatur progressiv abnimmt. Das heißt durch Kühlung der Turbinenscheibe bzw. (bei anderen Konstruktionen) der Schaufeln kann die Arbeitsaufnahme erheblich gesteigert werden. Mit gekühlten Scheiben ist es demnach möglich, leichte Materialien mit geringer Festigkeit vorzusehen, ohne dass Bruchgefahr bestünde und zugleich werden die Konstruktionen speziell von Scheibenturbinen wesentlich kompakter.

Aspekte in Bezug auf die erfindungsgemäße Scheibenläuferturbine:
1. Scheiben von Scheibenturbinen mit einem internen Fluidkreislauf derart gekühlt, dass es im äußeren Bereich zur Verdampfung und im zentralen Bereich zur Kondensation kommt als Folge von externer Wärme Zu- und Wärmeabfuhr vorzugsweise durch heiße Rauchgase, die als Arbeitsmedium zur Gewinnung von mechanischer Energie verwendet werden.
2. Die Scheibenschalen werden durch Hülsen, die eine äußere Befestigung ermöglichen, miteinander verbunden und so die Kombination mehrerer Scheiben ermöglicht.
3. Als Kühlmedien können organische oder anorganische Fluide und Metalle eingesetzt werden.
4. Anstelle von Scheiben können auch Schaufelelemente verwendet werden (Radialturbine).

### Einrichtung zur Umwandlung thermischer Energie in mechanische Energie:

Der zuvor beschriebene weitgehend isotherm arbeitende Entspanner ist Teil eines geschlossenen Gasturbinenprozesses. Der gesamte Prozess enthält aber auch noch eine Brennkammer, die in diesem Fall externalisiert ist, und einen Verdichter. Auf diese Weise ist es möglich ein sinnvoll adaptiertes Arbeitsmedium wie z.B. Xenon (vorzugsweise) oder andere Edelgase zu verwenden. Edelgase sind sinnvoll, weil sie nicht in der Lage sind zu strahlen, da sie einatomig sind. Die Strahlung des Gaskörpers würde zu einer erhöhten Wärmeübertragung führen, was die Gefahr birgt, dass sich der Gaskörper zwischen den Scheiben der Turbine zu schnell abkühlt und somit keine Arbeit an die Scheiben abgeben kann oder nur in sehr geringem Maße.

Für den Betrieb des gesamten Prozesses gibt es zwei grundsätzlich unterschiedliche Arbeitsmodelle:
- Isotherme Verdichtung auf angehobenem Temperaturniveau, derart dass das Arbeitsmedium nach der Entspannung nicht oder in bestimmtem Maße abgekühlt aber verdichtet wird, was die Nutzung der restlichen Energiedurch externe Senken ermöglichen würde, und
- Isotherme Verdichtung auf tiefstem Temperaturniveau, derart, dass das Arbeitsmedium nach der Entspannung zunächst abgekühlt und danach verdichtet wird, was zu einer Maximierung des thermischen Wirkungsgrades führen würde.

Im ersten Falle würde eine gewisse Restenergie im Arbeitsmedium verbleiben, womit der thermische Wirkungsgrad absinken würde, aber es wäre noch thermische Energie übrig für die Bedienung externer Senken. Grundsätzlich kann der Gasturbinenprozess durch Rekuperation der Abwärme nach der Entspannung aber so gestaltet werden, dass kein zweiter Kraftprozess nachgeschaltet werden müsste, da die Kraftübertrager (Scheiben) sehr stark thermisch belastbar sind. Das heißt es ist sowohl im Entspanner aber auch im Verdichter ein gleitender Betrieb möglich. Vorzugsweise sollte aus exergetischen Gründen aber nur der Verdichter gleitend betrieben werden.

### Partiell isotherme Verdichtung

Aus einem Druck-Volumen-Diagramm lassen sich die Integrale für die zuzuführende und gewonnene technische Arbeit ablesen und aus dem zugehörigen Temperatur-Entropie-Diagramm die entsprechenden Wärmeintegrale für Zu- und Abfuhr. Dargestellt ist dies beispielhaft in den Figuren 8 und 9. Nach der partiellen isothermen Verdichtung (Zustandsänderung 3 nach 4) wird das Arbeitsmedium isentrop (Zustandsänderung 4 nach 5) weiter auf die Endtemperatur bzw. den Enddruck verdichtet. Alternativ dazu könnte auch gleich vollständig isotherm (Zustandsänderung 3 nach 5) verdichtet werden, was allerdings eine stärkere Kühlung erfordern würde. Die so entstehende höhere Kühlenergie würde vorzugsweise der Brennkammer von der Verbrennungsluft, die ohnehin die Energie der Zustandsänderung 3 nach 4 aufnimmt, zusätzlich aufgenommen werden. Es käme dadurch zu gewissen exergetischen Einbußen durch Übertragungsverluste, es kann aber konstruktive und somit auch ökonomische Vorteile haben, so zu verfahren.

### Maximaler thermischer Wirkungsgrad

Nach der isobaren Abkühlung wird das Arbeitsmedium isotherm verdichtet, wobei die Verdichtung auch hier nur partiell isotherm erfolgen könnte, wenn zugelassen würde, dass in der Endphase dieses Schrittes eine isentrope Verdichtung erfolgt. Diesen Freiheitsgrad benötigt man, um wie im Falle der Hochtemperaturverdichtung die Konstruktion wirtschaftlich zu optimieren. Die Eintrittstemperatur in den Entspanner könnte ebenfalls gleiten, aber es ist aus exergetischen Gründen sinnvoll, den Entspanner immer bei maximaler Temperatur zu betreiben.

Mit der Abhitze aus der Brennkammer (vgl. Fig 7) kann ein zweiter Kreisprozess geführt werden, der allerdings keine gekühlten Scheibenelemente erfordert, da das Temperaturniveau wesentlich geringer ist (vgl. hierzu Figur 7). Es ist allerdings vorteilhaft, diesen Prozess ebenfalls mit Xenon oder einem anderen gasförmigen Arbeitsmedium, das eine geringe Wärmekapazität hat, zu führen. Die geringe Wärmekapazität ermöglicht die entsprechende Scheibenturbine mit einer Entspannungsstufe zu konzipieren. Der Niedertemperaturprozess kann auch gleitend gefahren werden, um Wärmeauskopplung für die Bereitstellung von Nutzwärme zu ermöglichen

### Konstruktive Lösungen

Im Gegensatz zur Entspannung, bei der die Temperatur des Arbeitsmediums im isentropen Fall ständig abnimmt, nimmt die Temperatur bei isentroper Verdichtung ständig zu. Tendenziell gilt dies auch für die partiell isothermen Prozessschritte, wobei dargestellt in einem p-V- bzw. T-s-Diagramm bei der Entspannung im Bereich von einem Zustand 0 nach einem Zustand 3 die Temperatur tendenziell abnimmt. Bei der Verdichtung nimmt die Temperatur von einem Zustand 4 nach einem Zustand 5 zu. Das heißt bei der Entspannung muss im Arbeitsbereich Wärme zu und bei der Verdichtung entsprechend Wärme abgeführt werden, damit jeweils isotherme bzw. partiell isotherme Zustandsänderungen eintreten können. Bei der Entspannung wird die Wärme innerhalb der Scheibe so verteilt, dass die im äußeren Bereich der Scheibe (fern der Welle) abgeführte Wärme dem inneren Bereich (nah der Welle) in gleichem Maße wieder zugeführt wird. Der "Restbereich" der Scheibe, der im wellennahen Bereich liegt, ermöglicht eine isentrope Entspannung .

Bei der Verdichtung müsste dieses Prinzip der Wärmeverteilung umgekehrt werden und zwar so, dass im inneren Bereich der Scheibe Wärme abgeführt würde und im oberen Bereich in gleichem Maße Wärme wieder dem Arbeitsmedium wieder zugeführt würde. Das Kühlmedium im Inneren der Scheibe bildet eine Zwei-Phasen-Strömung. Da das Kühlmedium aber auch der Fliehkraft unterworfen ist, würde sich eine Phasentrennung derart einstellen, dass der Flüssigkeitsanteil nach außen gedrückt wird und im wellennahen Bereich befände sich nur Dampf, das heißt, das Wärmeverteilungserfordernis ist auf diese Weise nicht zu lösen. Wenn man aber die Kondensation auf ein weiteres Scheibensystem überträgt, das seitens des Kühlmediums mit dem Verdichter korrespondiert, wäre das Wärmeverteilungsproblem gelöst.

Der mit dem Verdichter kommunizierende Kondensator ist in Figur 2 prinzipiell dargestellt und in Figur 5 bezüglich einer möglichen Ausführung mit jeweils drei Scheiben für die Verdampfung bei fast isotherme Kompression für das Arbeitsmedium um die Scheiben und für die Kondensation bei Aufheizung des Kühlmediums Wasser, Luft o.ä. Die Wahl einer gewissen Scheibenanzahl ist der besseren Vorstellung halber so gewählt worden. Die Wahl der Scheibenanzahl hängt von generellen fluidmechanischen Betrachtungen ab, die für diese prinzipielle Beschreibung unerheblich sind. Die äußeren Scheibenbereiche werden durch das Arbeitsmedium bzw. durch ein externes Kühlmedium (Umgebungsluft, Wasser aus der Umgebung oder eine andere externe Wärmesenke) umströmt. Die äußeren Ströme sind durch eine Trennscheibe, die am äußeren Rand in den Mantel der Turbine geführt ist, hermetisch getrennt. Die Einführung der Trennscheibe in den Turbinenmantel symbolisiert den Dichtungseffekt, alternativ könnte auch ein Reibschluss, wie bei Schaufelturbinen üblich, zwischen äußerem Scheibenmaß und Gehäuse dichtend wirken. Zur Abgrenzung der linken und rechten Peripherie gegenüber sind noch zwei weitere Trennscheiben in Figur 5 dargestellt. Eine Gesamtdarstellung des Konstruktionsprinzips des Hochdruckbereiches der Turbine ist weitgehend selbsterklärend in Figur 7 dargestellt.

### Interner Kühlmechanismus

Im Rotationskondensator hat das Kühlmedium eine höhere Dichte als im Verdampfer bzw. Verdichter. Entsprechend einem Naturumlaufkessel wirkt der Kondensator somit als Fallrohr- und der Verdichter als Steigrohrsystem nur mit dem Unterschied, dass das Fluid, der Zentrifugalkraft folgend, sich radial bewegt. Im Kondensator bewegt sich das Fluid von der Wellenachse weg nach außen, wird durch kurze Rohre in den Verdampfer geleitet, wo es sich zur Wellenachse hinbewegt. In der Welle sind Bohrungen, die den Weg in die Welle frei machen, womit die Rückführung des Fluids in den Kondensatorbereich möglich ist. Die Welle ist im Inneren axial gegenüber der Umgebung durch Blenden abgedichtet. Das externe Kühlmedium tritt vorzugsweise im wellennahen Bereich ein, wo das interne Kühlmedium noch einen hohen Dampfanteil hat. Auf diese Weise wird der Kondensationseffekt stärker, als bei umgekehrter Vorgehensweise. Der Verdichter arbeitet bei etwa kontanter Temperatur und ebenso das innere Kühlmedium, das sich im Verdampfungszustand befindet. Aufgrund der zunehmenden Dichte des Arbeitsmediums kommt es zu erhöhter Wärmestromdichte bzw. Wärmeübertragung an das innere Kühlmedium, was durch erhöhte Dampfbildung ausgeglichen wird, wodurch die Temperaturdifferenz im gesamten Verdichtungsbereich konstant bleibt.

### Rotationskondensator

Der Rotationskondensator wird vollständig in das Gehäuse der Turbine, das aus zwei exzentrisch angeordneten Halbschalen besteht, integriert. Der Rotationskondensator zieht vorzugsweise Umgebungsluft an, die durch um die Welle gelegte, schraubenförmig geformte und raumfeste Schaufeln auf Rotationsgeschwindigkeit gebracht wird. Auf diese Weise wird ein Ansaugeffekt erzeugt und die Beschleunigungsverluste an den Scheiben werden vermeiden. Die Luft verlässt den Rotationskondensator durch tangential ausgerichtete Öffnungen am äußeren Rand des Turbinengehäuses. Im Prinzip könnte auch eine Kühlflüssigkeit angesaugt werden, was allerdings den Nachteil hätte, dass die Temperaturerhöhung eher gering ausfallen würde, weil es apparativ schwierig ist die notwendigerweise kleinen Massenströme so zu führen, dass ein ausreichend guter Wärmeübergang möglich ist. Es kommt hinzu, dass die Zuführung bei Flüssigkeiten sorgfältig abgedichtet werden muss. Die Scheiben des Kondensators müssen einen möglichst großen Abstand voneinander haben, damit dem Fluid möglichst wenig Arbeit zugeführt wird. Die Arbeitszufuhr sollte so groß sein, dass der Druckverlust in dem nachfolgenden externen Wärmeübertrager ausgeglichen werden kann. Andererseits muss dafür gesorgt werden, dass der Wärmeübergang ausreichend groß ist, um eine ausreichend kleine Heizfläche zu erhalten. Die Auslegung erzwingt letzten Endes eine wirtschaftliche Optimierung. Eher nachteilig ist eine vollständige Externalisierung der Kühlung, also nicht um die Welle gelegt und mit ihr verbunden, weil dies eine Ableitung des inneren Kühlmediums in eine raumfeste Konstruktion erforderte. Dies würde eine besondere Abdichtung wegen der Kombination einer feststehenden Konstruktion (Wärmeübertrager) mit einer rotierenden Konstruktion erfordern.

Das innere Kühlmedium kann auf dem Weg zum äußeren Rand aufgrund des Coriolis-Effektes eine Verzögerung erfahren. Das bedeutet, dass sich die Summe der auftretenden Coriolis-Kräfte antreibend auf die Turbine auswirken kann.

Das heißt es müsste Arbeit geleistet werden, um diesen Effekt auszugleichen. Diese Arbeitszufuhr kann dadurch vermieden werden, dass die Scheiben im Inneren mit radial orientierten Lenkelementen oder Lenkrillen, die eine tangentiale Bewegung verhindern, ausgestattet wird.

### Rotationsverdichter

Wie der Rotationskondensator ist der Rotationsverdichter vollständig in das Gehäuse integriert. Der Rotationsverdichter nimmt das entspannte Arbeitsmedium im wellennahen Bereich auf, d.h. er liegt unmittelbar neben dem Entspanner. Das verdichtete Arbeitsmedium verlässt den Verdichter wie das externe Kühlmedium über tangential orientierte Öffnungen am Ende der beiden exzentrischen Sammler und wird zur Aufheizung der Brennkammer zugeführt.

Das innere Kühlmedium erfährt auf dem Weg vom äußeren Rand der Scheibe in Richtung Welle eine tangentiale Beschleunigung aufgrund des Coriolis-Effektes, die zur Arbeitsabgabe an die Scheibe führt. Die Arbeitsquelle wird durch tangentiale Reibungskraft hervorgerufen. Auf diese Weise kann zumindest ein Teil der Verdichterarbeit kompensiert werden. Am Eintritt in die Ableitungsöffnungen in der Welle wird die Coriolisgeschwindigkeit (Voreilung des Mediums in tangentialer Richtung) in Druckenergie umgewandelt, da sich das Fluid dem Lenkungszwang der Konstruktion fügen muss. Die Löcher sind vorzugsweise so zu gestalten, dass im Abstrom hinter den Löchern kein allzu großer Stoßverlust eintritt. Der Eintritt in den Rotationskondensator ist vorzugsweise so zu gestalten, dass eine gewisse Voreilung am Eintritt erzeugt wird, um die Arbeitsaufnahme des Fluids zu verringern (vgl. Figur 4.

### Externe Apparate

Die externen Apparate bestehen aus dem Rekuperator für die Rückführung der thermischen Energie aus dem Hochtemperaturverdichter, die zunächst von dem angekoppelten Rotationskühler aufgenommen wird. Das externe Kühlmedium ist vorzugsweise Umgebungsluft, die zugleich als Verbrennungsluft in der Brennkammer verwendet wird (siehe Figur 7). Alternativ ist bei Betrieb mit Niedertemperaturverdichter ein externer Rekuperator erforderlich, der die Abwärme nach dem Entspanner in die Verbrennungsluft integriert. Das externe Kühlmedium zur Kühlung des Niedertemperatur-Verdichters besteht vorzugsweise aus Umgebungsluft, die als thermischer Abfall an die Umgebung geleitet wird.

Der Brennkammer wird vorzugsweise in jedem Fall vorgewärmte Verbrennungsluft zugeführt. Das Arbeitsmedium ist vorzugsweise Edelgas, das mit der Abhitze der Brennkammer auf Betriebstemperatur erhitzt wird.

### Rekuperator zur Nutzung der Abhitze nach der Entspannung

Dieser Rekuperator ist vorzugsweise ein Eckrohr -Wärmeübertrager, der eine Gegenstromschaltung hat. Durch die Rohre wird Umgebungsluft geleitet und um die Rohre bewegt sich das Arbeitsmedium. Auf diese Weise ist sichergestellt, dass das Arbeitsmedium nicht durch Staub kontaminiert wird.

### Abhitzewärmeübertrager

Der Abhitzewärmeübertrager besteht aus einem Strahlungsraum, dessen Wände durch das Arbeitsmedium gekühlt werden und einem konvektiven Teil, der konstruktiv wie der Rekuperator aufgebaut ist. Das heißt, durch die Rohre strömt das Arbeitsmedium und um die Rohre das Rauchgas. Das Rauchgas wird nahezu auf das Niveau der Umgebung abgekühlt. Es bietet sich an eine Brennwerteinheit hinzuzuschalten, um Brennstoff einzusparen.

### Brennkammer

Die Brennkammer wird grundsätzlich mit einem beliebigen Brennstoff betrieben. Sie kann demnach mit einer Feststofffeuerung ausgestattet sein oder mit Brenner für fluide Brennstoffe. Die Wände der Brennkammer werden vorzugsweise mit den zur Verfügung stehenden Medien des Prozesses gekühlt oder aber aus Feuerfestmaterial gestaltet.

### Anlagenfließbild gemäß Figur 7

Das Anlagenfließbild stellt beispielhaft einen Gleitbetrieb dar. Das heißt die Verdichtung erfolgt auf höherem Temperaturniveau, um noch Wärme für externe Nutzung auskoppeln zu können (Kraft-Wärme-Kopplung). Die im folgenden angegebenen Zahlenwerte zu Temperaturen und Drücken sind beispielhaft eingeführt und können sich in Abhängigkeit von Anwendungserfordernissen erheblich ändern.

Brennstoff und vorgewärmte Luft werden der fiktiv adiabaten Brennkammer zugeleitet, wobei das dort gebildete Rauchgas die Brennkammer mit ca. 2000 °C verlässt. In einem nachgeschalteten Abhitzewärmeübertrager, der partiell zur Kühlung der Brennkammerwände mit dieser konstruktiv verbunden ist, wird das Rauchgas zunächst auf 500°C abgekühlt, danach einem Economiser für die Erwärmung des Arbeitsmediums der Niederdruckturbine zugeführt und mit 100°C wird das Rauchgas in den Kamin geleitet.

Die vom Rauchgas abgegebene Wärme dient der Erhitzung des Arbeitsmediums, das mit 400°C in den Abhitze-Wärmeübertrager ein- und mit 1500°C austritt. Das Arbeitsmedium ist vorzugsweise Xenon. Das Arbeitsmedium steht unter einem Druck von 15 bar ohne Berücksichtigung von minimalen Druckdifferenzen, die infolge des Transportes auftreten. Im Entspanner wird das Arbeitsmedium auf einen Druck von 1 bar abgesenkt, wobei zugleich die Temperatur auf 400°C sinkt. Der Entspannungsprozess erfolgt teilweise oder vollständig isotherm bei einer Arbeitstemperatur, die höher liegt als 400°C, aber nicht bei höheren Temperaturen als der Eintrittstemperatur des Arbeitsmediums. Das Niveau der Arbeitstemperatur hängt vom ausgewählten Kühlmedium und vom Material der Entspannerscheiben ab. Die abgegebene Wellenarbeit wird auf einen Generator übertragen, in dem eine Wandlung in elektrische Arbeit erfolgt. Innerhalb der Entspannungsstufe wird das Arbeitsmedium zunächst auf eine Arbeitstemperatur abgesenkt, wobei die abgeführte Wärme bei der eigentlichen Entspannung dem Arbeitsmedium wieder zugeführt wird. Auf diese Weise bleibt die Temperatur bei der Entspannung nahezu konstant. Die Endphase der Entspannung erfolgt nahezu isentrop, um exergetische Verluste zu minimieren. Das Arbeitsmedium wird in einem Luftvorwärmer bei etwa gleichem Druck weiter auf ein Niveau von 80 bis 200°C abgekühlt, wonach es in die Verdichterstufe eintritt. Im Verdichter erfolgt eine isotherme Druckanhebung auf 15 bar, wobei die Druckanhebung in der Endphase dieses Prozessschrittes auch isentrop erfolgen kann, entsprechend würde die Temperatur um ein gewisses Maß ansteigen. In welchem Maß dies zugelassen wird hängt davon ab, welches Scheibenmaterial im Verdichter eingesetzt wird und welcher exergetische Verlust hinsichtlich der Wärmeübertragung akzeptierbar ist. Die Verdichterscheiben werden durch ein intern in den Scheiben umlaufendes Medium gekühlt. Dieses Medium gibt seine Wärme an einen aus der Umgebung kommenden Wärmeträger ab. Das komprimierte Arbeitsmedium wird letzten Endes dem Abhitze-Wärmeübertrager zugeführt, womit der Kreislauf dieses Mediums geschlossen ist.

Die Verbrennungsluft wird nach dem Luftvorwärmer, den sie mit 80 bis 180 °C verlässt, der Brennkammer zugeführt. Ein weiterer Kühlstrom aus externer Quelle - hier wird der Rücklauf einer Nutzwärmesenke mit einer Temperatur bis zu 150°C angesetzt- ist erforderlich, um die Abwärme der Verdichterstufe in den Vorlauf der Nutzwärmesenke zu leiten. Die Temperatur dieses Mediums erhöht sich im Vorlauf auf bis zu 350°C.

### Kreisprozess der Niederdruckturbine

Das Rauchgas verlässt die Brennkammer bei einer Temperatur von 500°C. Es bietet sich an, dieses Temperaturniveau in einer zweiten Gasturbine, die bei niedrigem Druck arbeitet zu nutzen. Die Niederdruckturbine besteht wie die Hochdruckturbine aus einem Entspanner, der bei 400°C und 5bar arbeitet und einem Verdichter, der isotherm ausgeführt wird und am Austritt die Parameter 50°C und 5 bar hat. Dieser Entspanner wird ebenfalls mit gekühlten Scheiben ausgeführt wie der des Hochdruckteils. Die Abhitze des Entspanners wird zur Aufwärmung der Verbrennungsluft von 10°C auf 80°C in einem Niedertemperaturvorwärmer genutzt. Die Umgebungsluft fällt mit 10°C an, sodass das Xenon (vorzugsweise) auf 20°C abgekühlt werden kann. Der erforderliche Kühlstrom für die den Niederdruckverdichter kommt aus der Umgebung und ist thermisch wertlos. Auch die Niedertemperaturturbine könnte im Gleitbetrieb gefahren werden, um Prozesswärme auszukoppeln.

Alternativ zur Niedertemperatur Gasturbine könnte auch ein Rankineprozess gestaltet werden. Hierdurch entstünde der Vorteil, dass Dampf erzeugt würde, der für besondere Prozesszwecke nützlich sein könnte.

Aspekte der Gesamtanlage gemäß Anlagenfließbild in Figur 7
1. Zur Verfügung gestellt wird ein Gasturbinenprozess, der aus einer Hoch- und einer Niederdruckstufe besteht, wobei für die Entspanner und Verdichter jeweils Scheibenkonstruktionen, die im Fall der Hochdruckstufe von innen gekühlte Scheiben enthalten, enthalten, wobei der Verdichter der Hochdruckstufe ein verdampfendes Medium enthalt, das mit einem Rotationskondensator unmittelbar kombiniert ist und der Rotationsverdampfer durch ein externes Medium gekühlt wird, und in der Hochdruckstufe ein Edelgas als Arbeitsmedium eingesetzt wird, das eine geringe Wärmeleitfähigkeit und eine geringe spezifische Wärmekapazität hat, wobei das Edelgas durch eine externe Wärmequelle erhitzt wird.
2. Die externe Wärmequelle ist eine Brennkammer mit gekühlten oder ungekühlten Wänden, in der ein gasförmiger, flüssiger oder fester Brennstoff mit Luft als Sauerstoffgeber verbrannt wird und die Wände durch das Arbeitsmedium der Hochdruckstufe gekühlt werden.
3. Der Brennkammer nachgeschaltet ist ein Economiser, in dem das Rauchgase aus der Brennkammer weiter abgekühlt werden und seine Wärme an das Arbeitsmedium der Niederdruckstufe abgibt, wobei das Arbeitsmedium vorzugsweise ein Edelgas ist mit einer geringen Wärmekapazität ist.
4. Anstelle der Niederdruckstufe bestehend aus Entspanner und Verdichter wird eine Dampfturbine mit Speisepumpe eingesetzt, die jeweils vorzugsweise Scheibenkonstruktionen sind, wobei die Dampfturbine mehrstufig sein kann und zwischen den einzelnen Stufen Rückführbereiche sind, in denen der Dampf an den Umfang der Scheiben geleitet wird.
5. Die wellennah gelegenen Austrittsöffnungen der Scheiben in der letzten Stufe einer mehrstufigen Turbine oder einer einstufigen Turbine sind so gegeneinander versetzt, dass der austretende Gasstrom drallfrei ist, derart dass der Versetzungswinkel bezüglich der Drehrichtung der Scheibe negativ ist.
6. Das Arbeitsmedium kann alternativ zum vorherigen Punkt 5. auch durch Längsnuten in der Welle nach außengeleitet werden, wobei die Nuten zur Aufhebung des Dralls am Austritt des Gases entgegen der Drehrichtung schraubenlinienartig verdreht sind.
7. Die Scheiben des Hochdruckentspanners sind innen hohl, so dass sich ein verdampfendes Medium derart verhalten kann, dass es im äußeren, heißen Bereich verdampft und im inneren, kalten Bereich kondensiert, so dass das außen strömende Arbeitsmedium auf dem Weg vom äußeren zum inneren Rand der Scheibe zunächst ohne Arbeit abzugeben verdampft und danach bei Abgabe von Arbeit Wärme aufnimmt, so dass die Abgabe der Arbeit isotherm erfolgt, wobei der innere Kondensatfilm durch Zentrifugalkraft nach außen zurückströmt, und optional eine gewisse Strecke im wellennahem Bereich ungekühlt ist, so dass eine restliche isentrope Entspannung erfolgen kann.
8. Die Scheiben des Hochdruckverdichteres sind ebenfalls innen hohl und mit einem Rotationswärmeübertrager, der aus ebenfalls hohlen Scheiben besteht, durch die Welle und durch Rohrleitungen am äußeren Rand der Scheiben gelegen verbunden, wobei der Rotationswärmeübertrager von einem externen Arbeitsmedium, das die Scheiben des Rotationswärmeübertragers außen umströmt, gekühlt wird.

Der Effekt der erfindungsgemäßen Scheibenläuferturbine ist, dass aufgrund der Kühlung der Scheibe diese einer relativ geringen thermischen Belastung ausgesetzt ist, sodass eine Vielfalt von Materialien zur Ausbildung des jeweiligen Scheibenkörpers eingesetzt werden können, unter anderem auch Materialien, die eine geringe Dichte und demzufolge ein geringes Gewicht aufweisen. Insbesondere Scheiben aus Materialien mit sehr geringer Dichte können aufgrund ihres dadurch bedingten geringen Massenträgheitsmoments mit einer sehr hohen Drehzahl gedreht werden, so dass die Turbine mit hoher Drehzahl und demzufolge mit hohen Wirkungsgrad betrieben werden kann.

Der Effekt der erfindungsgemäßen Einrichtung zur Umwandlung thermischer Energie in mechanische Energie besteht insbesondere darin, dass durch den hohen Wirkungsgrad der integrierten Scheibenläuferturbine auch die gesamte Einrichtung mit einem hohen Wirkungsgrad betrieben werden kann, sodass ein relativ geringer thermischer bzw. chemischer Energieeintrag notwendig ist, um mechanische bzw. elektrische Energie gewünschter Menge zur Verfügung zu stellen.

### Bezugszeichenliste

| | |
|---|---|
| Scheibenläuferturbine | 10 |
| Scheibe | 11 |
| Gasaufnahmeraum | 12 |
| Scheibenkörper der Scheibe | 13 |
| Scheibenöffnung | 131 |
| Hohlraum der Scheibe | 14 |
| Scheibenzwischenraum | 15 |
| Kühlmedium | 16 |
| gasförmiges Kühlmedium | 161 |
| flüssiges Kühlmedium | 162 |
| erster Kühlmediumstrom | 163 |
| zweiter Kühlmediumstrom | 164 |
| Gas, Gasvolumenstrom | 17 |
| Verdichtereinheit | 20 |
| Verdichterscheibe | 21 |
| Verdichtergasaufnahmeraum | 22 |
| Gasvolumenstromeintritt | 221 |
| Gasvolumenstromaustritt | 222 |
| Gasvolumenstromübergang | 223 |
| Scheibenkörper der Verdichterscheibe | 23 |
| Hohlraum der Verdichterscheibe | 24 |
| von Verdichterscheibe abgedeckter Wellenbereich | 25 |
| Kühlungseinheit | 30 |
| Kühlungsscheibe | 31 |
| Kühlmittelaufnahmeraum | 32 |
| Kühlmitteleintritt | 321 |
| Kühlmittelaustritt | 322 |
| Scheibenkörper der Kühlungsscheibe | 33 |
| Hohlraum der Kühlungsscheibe | 34 |
| von Kühlungsscheibe abgedeckter Wellenbereich | 35 |
| Kühlmittel | 37 |
| Trennelement | 41 |
| Quersteg | 42 |
| hohler Verbindungsraum | 43 |
| Öffnung | 44 |
| Wellenabschnittsbegrenzung | 45 |
| Rotationsachse | 50 |
| Rotation | 501 |
| Welle | 51 |
| Gehäuse | 52 |
| Abdichtung | 53 |
| erster Wärmeübertrager | 61 |
| zweiter Wärmeübertrager | 62 |
| dritter Wärmeübertrager | 63 |
| Wärmesenke | 64 |
| vierter Wärmeübertrager | 65 |
| Kamin | 66 |
| Brennkammer | 67 |
| Generator | 68 |
| Niederdruckbereich | 70 |
| Niederdruckverdichter | 71 |
| Niederdruckentspanner | 72 |
| Hochdruckbereich | 80 |
| Hochdruckverdichter | 81 |
| Hochdruckentspanner | 82 |
| erstes Arbeitsmedium | 100 |
| erwärmtes erstes Arbeitsmedium | 101 |
| entspanntes erstes Arbeitsmedium | 102 |
| abgekühltes erstes Arbeitsmedium | 103 |
| verdichtetes erstes Arbeitsmedium | 104 |
| zweites Arbeitsmedium | 200 |
| erwärmtes zweites Arbeitsmedium | 201 |
| entspanntes zweites Arbeitsmedium | 202 |
| abgekühltes zweites Arbeitsmedium | 203 |
| verdichtetes zweites Arbeitsmedium | 204 |
| Verbrennungsluft | 300 |
| Umgebungsluft | 301 |
| zwischenerwärmte Verbrennungsluft | 302 |
| vorgewärmte Verbrennungsluft | 303 |
| Wärmeträger | 400 |
| kühler Wärmeträger | 401 |
| warmer Wärmeträger | 402 |
| Rauchgas | 600 |
| abgekühltes Rauchgas | 601 |

## Patentansprüche

1. Scheibenläuferturbine (10) zur Umwandlung der Enthalpie eines Gasvolumenstroms (17) in mechanische Energie, umfassend wenigstens eine auf einer Rotationsachse (50) angeordnete Scheibe (11), welche bei im Wesentlichen tangentialer Anströmung mit einem Gasvolumenstrom (17) in Rotation (501) versetzbar ist, sodass mechanische Energie an einer mit der Scheibe (11) gekoppelten Welle (51) abnehmbar ist, wobei die Scheibenläuferturbine (10) wenigstens einen Gasaufnahmeraum (12) zur Aufnahme und Ausbringung des zumindest teilweise tangential die Scheibe (11) anströmenden Gasvolumenstroms (17) aufweist, und wobei ein die Scheibe (11) ausbildender Scheibenkörper (13) zumindest einen Hohlraum (14) aufweist, **dadurch gekennzeichnet, dass** in dem Hohlraum zwecks Kühlung des Scheibenkörpers (13) ein Kühlmedium (16) insbesondere eine Kühlflüssigkeit, aufgenommen oder aufnehmbar ist.

2. Scheibenläuferturbine (10) zur Umwandlung der Enthalpie eines Gasvolumenstroms (17) in mechanische Energie nach Anspruch 1, **dadurch gekennzeichnet, dass** die Scheibe (11) dazu eingerichtet ist, in deren Hohlraum (14) aufgenommenes Kühlmedium (16) bei Zuführung von Wärme von dem die Scheibe (11) anströmenden Gasvolumenstrom (17) an die Scheibe (11) im Hohlraum (14) wenigstens teilweise zu verdampfen.

3. Verfahren zum Betrieb einer Scheibenläuferturbine (10) zur Umwandlung der Enthalpie eines Gasvolumenstroms (17) in mechanische Energie gemäß einem der Ansprüche 1 und 2, **dadurch gekennzeichnet, dass** ein Gasvolumenstrom (17) im Wesentlichen tangential die Scheibe (11) anströmend dieser zugeführt wird, sodass die Scheibe (11) reibungsbedingt in Rotation (501) versetzt wird.

4. Verfahren zum Betrieb einer Scheibenläuferturbine (10) zur Umwandlung der Enthalpie eines Gasvolumenstroms (17) in mechanische Energie nach Anspruch 3, **dadurch gekennzeichnet, dass** Wärme des Gasvolumenstroms (17) auf das Kühlmedium (16) im Hohlraum (14) des Scheibenkörpers (11) übertragen wird, sodass das Kühlmedium (16) zumindest teilweise verdampft.

5. Einrichtung zur Umwandlung thermischer Energie in mechanische Energie,
**gekennzeichnet durch** eine Scheibenläuferturbine (10) nach zumindest einem der Ansprüche 1 und 2, wobei die Scheibe (11) der Scheibenläuferturbine (10) koaxial auf einer Welle (51) angeordnet ist, und wobei die Welle (51) mechanisch mit einer Verdichtungseinheit (20) verbunden ist, die wenigstens eine mit der Welle (51) rotationsfest verbundene Verdichterscheibe (21) aufweist, sodass bei Rotation (501) der Scheibenläuferturbine (10) die Verdichterscheibe (21) in Rotation (501) versetzbar ist und wobei die Verdichtungseinheit (20) einen Verdichtergasaufnahmeraum (22) umfasst, welcher strömungstechnisch mit dem Gasaufnahmeraum (12) der Scheibenläuferturbine (10) verbunden ist, sodass von der Verdichtungseinheit (20) verdichtetes Gas (17) der Scheibenläuferturbine (10), insbesondere dem Gasaufnahmeraum (12) der Scheibenläuferturbine (10), zuführbar ist.

6. Einrichtung zur Umwandlung thermischer Energie in mechanische Energie nach Anspruch 5, **dadurch gekennzeichnet, dass** die Verdichterscheibe (21) in einem die Verdichterscheibe (21) ausbildenden Scheibenkörper (23) wenigstens einen Hohlraum (24) aufweist, wobei der Hohlraum (14) wenigstens einer Scheibe (11) der Scheibenläuferturbine (10) strömungstechnisch mit dem Hohlraum (24) wenigstens einer Verdichterscheibe (21) verbunden ist, sodass wenigstens teilweise in gasförmiger Phase vorliegendes Kühlmedium (16) aus dem Hohlraum (14) der Scheibe (11) der Scheibenläuferturbine (10) dem Hohlraum (24) der Verdichterscheibe (21) zuführbar ist.

7. Einrichtung zur Umwandlung thermischer Energie in mechanische Energie nach einem der Ansprüche 5 und 6, **dadurch gekennzeichnet, dass** die Verdichterscheibe (21) rotationsfest mit einer drehbaren Kühlungseinheit (30) verbunden ist, wobei die Kühlungseinheit (30) wenigstens eine Kühlungsscheibe (31) aufweist, die koaxial auf einer Kühlerwelle angeordnet ist, die mit der Welle (51) der Scheibenläuferturbine (10) drehfest verbunden ist, und wobei die Kühlungsscheibe (31) in dem die Kühlungsscheibe (31) ausbildenden Scheibenkörper (33) wenigstens einen Hohlraum (34) aufweist und der Hohlraum (34) der Kühlungsscheibe (31) strömungstechnisch mit dem Hohlraum (24) der Verdichterscheibe (21) verbunden ist, sodass in der Verdichtereinheit (20) erwärmtes Kühlmedium (16) der Kühlungseinheit (30) zuführbar ist, mittels der das Kühlmedium (16) in der Kühlungsscheibe (31) der Kühlungseinheit (30) kühlbar ist und von dieser wieder an die Verdichtungsscheibe (21) der Verdichtereinheit (20) rückführbar ist.

8. Einrichtung zur Umwandlung thermischer Energie in mechanische Energie nach Anspruch 7, **dadurch gekennzeichnet, dass** wenigstens eine erste strömungstechnische Verbindung zwischen dem Hohlraum (24) der Verdichterscheibe (21) und dem Hohlraum (34) der Kühlungsscheibe (31) mittels wenigstens eines durchströmbaren, im Wesentlichen achsparallel zur Rotationsachse (50) der Welle (51) zwischen der Verdichterscheibe (21) und der Kühlungsscheibe (31) angeordneten, Quersteges (42) realisiert ist.

9. Einrichtung zur Umwandlung thermischer Energie in mechanische Energie nach einem der Ansprüche 7 und 8, **dadurch gekennzeichnet, dass** wenigstens eine zweite strömungstechnische Verbindung zwischen einem Hohlraum (24) wenigstens einer Verdichterscheibe (21) und einem Hohlraum (34) wenigsten einer Kühlungsscheibe (31) mittels eines hohlen Verbindungsraums (43) in einem Wellenabschnitt realisiert ist, der sich von einem von einer Verdichterscheibe (21) abgedeckten Wellenbereich (25) bis zu einem von einer Kühlungsscheibe (31) abgedeckten Wellenbereich (35) erstreckt, wobei die abgedeckten Wellenbereiche axial jeweils wenigstens eine Öffnung (44) aufweisen, zwecks Realisierung einer Strömung des Kühlmediums (16) in und aus dem hohlen Verbindungsraum (43) der Welle (51) in und aus dem Hohlraum (24) der Verdichterscheibe (21) und/oder in und aus dem Hohlraum (34) der Kühlungsscheibe (31).

10. Verfahren zur Umwandlung thermischer Energie in mechanische Energie, bei dem in einer Einrichtung zur Umwandlung thermischer Energie in mechanische Energie gemäß wenigstens einem der Ansprüche 5 - 9 das Verfahren zum Betrieb einer Scheibenläuferturbine (10) nach einem der Ansprüche 3 oder 4 durchgeführt wird, wobei in wenigstens einer Verdichterscheibe (21), insbesondere dem Hohlraum (24) einer Verdichterscheibe (21), erwärmtes Kühlmedium (16) wenigstens einer Kühlungsscheibe (31), insbesondere aus dem Hohlraum (34) einer Kühlungsscheibe (31), zugeführt wird und dort abgekühlt wird, und nach der Abkühlung des Kühlmediums (16) dieses wieder einer Verdichterscheibe (21) zugeführt wird.

11. Verfahren zur Umwandlung thermischer Energie in elektrische Energie, bei dem das Verfahren zur Umwandlung thermischer Energie in mechanische Energie gemäß Anspruch 10 durchgeführt wird und kinetische Energie der rotierenden Welle (51) mittels eines Generators (68) in elektrische Energie umgewandelt wird.

## Claims

1. A tesla-type turbine (10) for converting the enthalpy of a gas volume flow (17) into mechanical energy, comprising at least one disk (11) which is arranged on an axis of rotation (50) and which can be set in rotation (501) with a gas volume flow (17) flowing substantially tangentially towards it, so that mechanical energy can be removed at a shaft (51) coupled to the disk (11), wherein the tesla-type turbine (10) comprises at least one gas receiving chamber (12) for receiving and discharging the gas volume flow (17) flowing at least partially tangentially to the disk (11), and wherein a disk body (13) forming the disk (11) comprises at least one cavity (14), **characterized in that** a cooling medium (16), in particular a cooling liquid, is received or can be received in the cavity for the purpose of cooling the disk body (13).

2. The tesla-type turbine (10) for converting the enthalpy of a gas volume flow (17) into mechanical energy according to claim 1, **characterized in that** the disk (11) is apparatus for at least partially evaporating cooling medium (16) received in its cavity (14) when heat is supplied to the disk (11) from the gas volume flow (17) flowing towards the disk (11) in the cavity (14).

3. A method for operating a tesla-type turbine (10) for converting the enthalpy of a gas volume flow (17) into mechanical energy according to one of claims 1 and 2, **characterized in that** a gas volume flow (17) is fed to the disk (11) essentially tangentially, so that the disk (11) is set in rotation (501) due to friction.

4. The method for operating a tesla-type turbine (10) for converting the enthalpy of a gas volume flow (17) into mechanical energy according to claim 3, **characterized in that** heat of the gas volume flow (17) is transferred to the cooling medium (16) in the cavity (14) of the disk body (11), so that the cooling medium (16) at least partially evaporates.

5. An apparatus for converting thermal energy into mechanical energy, **characterized by** a tesla-type turbine (10) according to at least one of claims 1 and 2, wherein the disk (11) of the tesla-type turbine (10) is arranged coaxially on a shaft (51), and wherein the shaft (51) is mechanically connected to a compression unit (20) which comprises at least one compression disk (21) connected to the shaft (51) in a rotationally fixed manner, so that when the tesla-type turbine (10) is set in rotation (501), the compression disk (21) can be set in rotation (501) and wherein the compression unit (20) comprises a compressor gas receiving chamber (22), which is fluidically connected to the gas receiving chamber (12) of the tesla-type turbine (10), so that gas (17) compressed by the compression unit (20) can be fed to the tesla-type turbine (10), in particular to the gas receiving chamber (12) of the tesla-type turbine (10).

6. The apparatus for converting thermal energy into mechanical energy according to claim 5, **characterized in that** the compression disk (21) has at least one cavity (24) in a disk body (23) forming the compression disk (21), wherein the cavity (14) of at least one disk (11) of the tesla-type turbine (10) is fluidically connected to the cavity (24) of at least one compression disk (21), so that cooling medium (16) present at least partially in gaseous phase can be fed from the cavity (14) of the disk (11) of the tesla-type turbine (10) to the cavity (24) of the compression disk (21).

7. The apparatus for converting thermal energy into mechanical energy according to one of claims 5 and 6, **characterized in that** the compression disk (21) is connected in a rotationally fixed manner to a rotatable cooling unit (30), wherein the cooling unit (30) comprises at least one cooling disk (31) which is arranged coaxially on a cooler shaft which is connected in a rotationally fixed manner to the shaft (51) of the tesla-type turbine (10), and wherein the cooling disk (31) comprises at least one cavity (34) in the disk body (33) forming the cooling disk (31) and the cavity (34) of the cooling disk (31) is fluidically connected to the cavity (24) of the compression disk (21), so that cooling medium (16) heated in the compression unit (20) can be fed to the cooling unit (30), by means of which the cooling medium (16) can be cooled in the cooling disk (31) of the cooling unit (30) and can be returned from the latter to the compression disk (21) of the compression unit (20).

8. The apparatus for converting thermal energy into mechanical energy according to claim 7, **characterized in that** at least a first fluidic connection between the cavity (24) of the compression disk (21) and the cavity (34) of the cooling disk (31) is realized by means of at least one transverse web (42) through which flow can pass and which is arranged essentially axially parallel to the axis of rotation (50) of the shaft (51) between the compression disk (21) and the cooling disk (31).

9. The apparatus for converting thermal energy into mechanical energy according to one of claims 7 and 8, **characterized in that** at least a second fluidic connection between a cavity (24) of at least one compression disk (21) and a cavity (34) of at least one cooling disk (31) is realized by means of a hollow connecting space (43) in a shaft section, which extends from a shaft region (25) covered by a compression disk (21) to a shaft region (35) covered by a cooling disk (31), wherein the covered shaft regions each comprise axially at least one opening (44) for the purpose of realizing a flow of the cooling medium (16) into and out of the hollow connecting space (43) of the shaft (51) into and out of the cavity (24) of the compression disk (21) and/or into and out of the cavity (34) of the cooling disk (31).

10. A method for converting thermal energy into mechanical energy, in which, in an apparatus for converting thermal energy into mechanical energy according to at least one of claims 5 - 9, the method for operating a tesla-type turbine (10) according to one of claims 3 or 4 is carried out, wherein, in at least one compression disk (21), in particular the cavity (24) of a compression disk (21), heated cooling medium (16) is fed to at least one cooling disk (31), in particular from the cavity (34) of a cooling disk (31), and is cooled there, and after the cooling medium (16) has cooled down, it is again supplied to a compression disk (21).

11. A method for converting thermal energy into electrical energy, wherein the method for converting thermal energy into mechanical energy is carried out according to claim 10 and kinetic energy of the rotating shaft (51) is converted into electrical energy by means of a generator (68).

## Revendications

1. Turbine à rotor à disque (10) pour la conversion de l'enthalpie d'un courant volumique gazeux (17) en énergie mécanique, comprenant au moins un disque (11) disposé sur un axe de rotation (50) qui peut être mis en rotation (501) en cas d'écoulement incident essentiellement tangentiel avec un courant volumique gazeux (17) de sorte que de l'énergie mécanique peut être prélevée sur un arbre (51) couplé au disque (11), dans laquelle la turbine à rotor à disque (10) présente au moins un espace de réception de gaz (12) pour la réception et la récupération du courant volumique gazeux (17) incident de manière au moins partiellement tangentielle sur le disque (11), et dans laquelle un corps de disque (13) formant le disque (11) présente au moins un espace creux (14), **caractérisée en ce qu'**un milieu réfrigérant (16), notamment un liquide réfrigérant, est reçu ou peut être reçu dans l'espace creux dans le but de refroidir le corps de disque (13).

2. Turbine à rotor à disque (10) pour la conversion de l'enthalpie d'un courant volumique gazeux (17) en énergie mécanique selon la revendication 1, **caractérisée en ce que** le disque (11) est configuré pour évaporer au moins partiellement du milieu réfrigérant (16) reçu dans son espace creux (14) en cas d'acheminement de chaleur par le courant volumique gazeux (17) incident sur le disque (11) au disque (11) dans l'espace creux (14).

3. Procédé d'exploitation d'une turbine à rotor à disque (10) pour la conversion de l'enthalpie d'un courant volumique gazeux (17) en énergie mécanique selon une des revendications 1 et 2, **caractérisé en ce qu'**un courant volumique gazeux (17) est acheminé de manière incidente essentiellement tangentielle au disque (11) à celui-ci de sorte que le disque (11) est mis en rotation (501) de manière conditionnée par la friction.

4. Procédé d'exploitation d'une turbine à rotor à disque (10) pour la conversion de l'enthalpie d'un courant volumique gazeux (17) en énergie mécanique selon la revendication 3, **caractérisé en ce que** de la chaleur du courant volumique gazeux (17) est transmise au milieu réfrigérant (16) dans l'espace creux (14) du corps de disque (11) de sorte que le milieu réfrigérant (16) s'évapore au moins partiellement.

5. Installation de conversion d'énergie thermique en énergie mécanique, **caractérisée par** une turbine à rotor à disque (10) selon au moins une des revendications 1 et 2, dans laquelle le disque (11) de la turbine à rotor à disque (10) est disposé de manière coaxiale sur un arbre (51), et dans laquelle l'arbre (51) est connecté mécaniquement à un module de compression (20) qui présente au moins un disque compresseur (21) connecté de manière fixe en rotation à l'arbre (51) de sorte qu'en cas de rotation (501) de la turbine à rotor à disque (10), le disque compresseur (21) peut être mis en rotation (501) et dans laquelle le module de compression (20) comprend un espace de réception de gaz compresseur (22) qui est connecté en termes de technique d'écoulement à l'espace de réception de gaz (12) de la turbine à rotor à disque (10) de sorte que du gaz comprimé (17) par le module de compression (20) peut être acheminé à la turbine à rotor à disque (10), notamment à l'espace de réception de gaz (12) de la turbine à rotor à disque (10).

6. Installation de conversion d'énergie thermique en énergie mécanique selon la revendication 5, **caractérisée en ce que** le disque compresseur (21) présente dans un corps de disque (23) formant le disque compresseur (21) au moins un espace creux (24), dans laquelle l'espace creux (14) d'au moins un disque (11) de la turbine à rotor à disque (10) est connecté en termes de technique d'écoulement à l'espace creux (24) d'au moins un disque compresseur (21) de sorte que du milieu réfrigérant (16) présent au moins partiellement en phase gazeuse peut être acheminé de l'espace creux (14) du disque (11) de la turbine à rotor à disque (10) à l'espace creux (24) du disque compresseur (21).

7. Installation de conversion d'énergie thermique en énergie mécanique selon une des revendications 5 et 6, **caractérisée en ce que** le disque compresseur (21) est connecté de manière fixe en rotation à un module de refroidissement rotatif (30), dans laquelle le module de refroidissement (30) présente au moins un disque de refroidissement (31) qui est disposé de manière coaxiale sur un arbre de réfrigérant qui est connecté de manière fixe en rotation à l'arbre (51) de la turbine à rotor à disque (10), et dans laquelle le disque de refroidissement (31) présente dans le corps de disque (33) formant le disque de refroidissement (31) au moins un espace creux (34) et l'espace creux (34) du disque de refroidissement (31) est connecté en termes de technique d'écoulement à l'espace creux (24) du disque compresseur (21) de sorte que du milieu réfrigérant (16) chauffé dans le module compresseur (20) peut être acheminé au module de refroidissement (30) au moyen duquel le milieu réfrigérant (16) peut être refroidi dans le disque de refroidissement (31) du module de refroidissement (30) et peut être renvoyé de celui-ci de nouveau au disque de compression (21) du module compresseur (20).

8. Installation de conversion d'énergie thermique en énergie mécanique selon la revendication 7, **caractérisée en ce qu'**au moins une première connexion technique d'écoulement est réalisée entre l'espace creux (24) du disque compresseur (21) et l'espace creux (34) du disque de refroidissement (31) au moyen d'au moins une traverse (42) pouvant être parcourue, disposée de manière essentiellement parallèle à l'axe de rotation (50) de l'arbre (51) entre le disque compresseur (21) et le disque de refroidissement (31).

9. Installation de conversion d'énergie thermique en énergie mécanique selon une des revendications 7 et 8, **caractérisée en ce qu'**au moins une seconde connexion technique d'écoulement est réalisée entre un espace creux (24) d'au moins un disque compresseur (21) et un espace creux (34) d'au moins un disque de refroidissement (31) au moyen d'un espace de connexion creux (43) dans une section d'arbre qui s'étend d'une région d'arbre (25) recouverte par un disque compresseur (21) jusqu'à une région d'arbre (35) recouverte par un disque de refroidissement (31), dans laquelle les régions d'arbre recouvertes présentent axialement chacune au moins une ouverture (44) dans le but de réaliser un écoulement du milieu réfrigérant (16) dans et hors de l'espace de connexion creux (43) de l'arbre (51), dans et hors de l'espace creux (24) du disque compresseur (21) et/ou dans et hors de l'espace creux (34) du disque de refroidissement (31).

10. Procédé de conversion d'énergie thermique en énergie mécanique, lors duquel dans une installation de conversion d'énergie thermique en énergie mécanique selon au moins une des revendications 5 à 9, le procédé d'exploitation d'une turbine à rotor à disque (10) selon une des revendications 3 ou 4 est réalisé, dans lequel du milieu réfrigérant (16) chauffé dans au moins un disque compresseur (21), notamment l'espace creux (24) d'un disque compresseur (21), est acheminé à au moins un disque de refroidissement (31), notamment à partir de l'espace creux (34) d'un disque de refroidissement (31), et y est refroidi, et le milieu réfrigérant (16) est de nouveau acheminé à un disque compresseur (21) après son refroidissement.

11. Procédé de conversion d'énergie thermique en énergie électrique, lors duquel le procédé de conversion d'énergie thermique en énergie mécanique selon la revendication 10 est réalisé et de l'énergie cinétique de l'arbre rotatif (51) est convertie en énergie électrique au moyen d'un générateur (68).
